(19) Europäisches Patentamt
European Patent Office
Office européen des brevets

(11) EP 4 484 459 A1

(12) **EUROPEAN PATENT APPLICATION**
published in accordance with Art. 153(4) EPC

(43) Date of publication:
**01.01.2025 Bulletin 2025/01**

(21) Application number: **23886096.9**

(22) Date of filing: **20.10.2023**

(51) International Patent Classification (IPC):
***C08F 210/16*** *(2006.01)* ***C08F 210/14*** *(2006.01)*
***C08J 5/18*** *(2006.01)*

(52) Cooperative Patent Classification (CPC):
**C08F 210/14; C08F 210/16; C08J 5/18**

(86) International application number:
**PCT/KR2023/016345**

(87) International publication number:
**WO 2024/096400 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.11.2022 KR 20220144765**
**16.10.2023 KR 20230137792**

(71) Applicant: **LG Chem, Ltd.**
**Yeongdeungpo-gu**
**Seoul 07336 (KR)**

(72) Inventors:
- **HONG, Seok Bin**
  **Daejeon 34122 (KR)**
- **KIM, Hyun Tae**
  **Daejeon 34122 (KR)**
- **CHOI, Sungho**
  **Daejeon 34122 (KR)**
- **JEON, Sangjin**
  **Daejeon 34122 (KR)**
- **KANG, Minyoung**
  **Daejeon 34122 (KR)**
- **LEE, Jinyoung**
  **Daejeon 34122 (KR)**
- **GWON, Donghyeon**
  **Daejeon 34122 (KR)**

(74) Representative: **Hoffmann Eitle**
**Patent- und Rechtsanwälte PartmbB**
**Arabellastraße 30**
**81925 München (DE)**

(54) **POLYOLEFIN AND FILM COMPRISING SAME**

(57) Provided are a polyolefin exhibiting an excellent haze property along with a high drop impact strength property, and a film including the same.

【FIG. 1a】

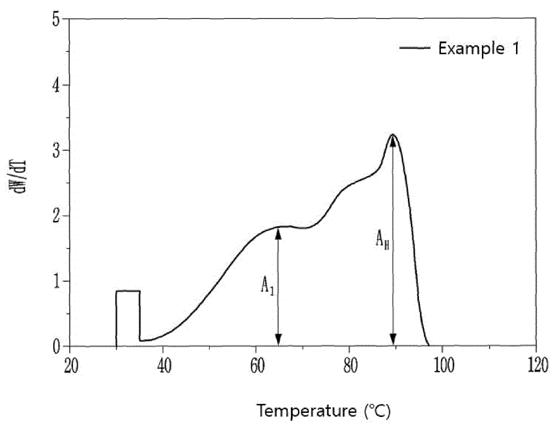




Processed by Luminess, 75001 PARIS (FR)

(Cont. next page)

【FIG. 1b】

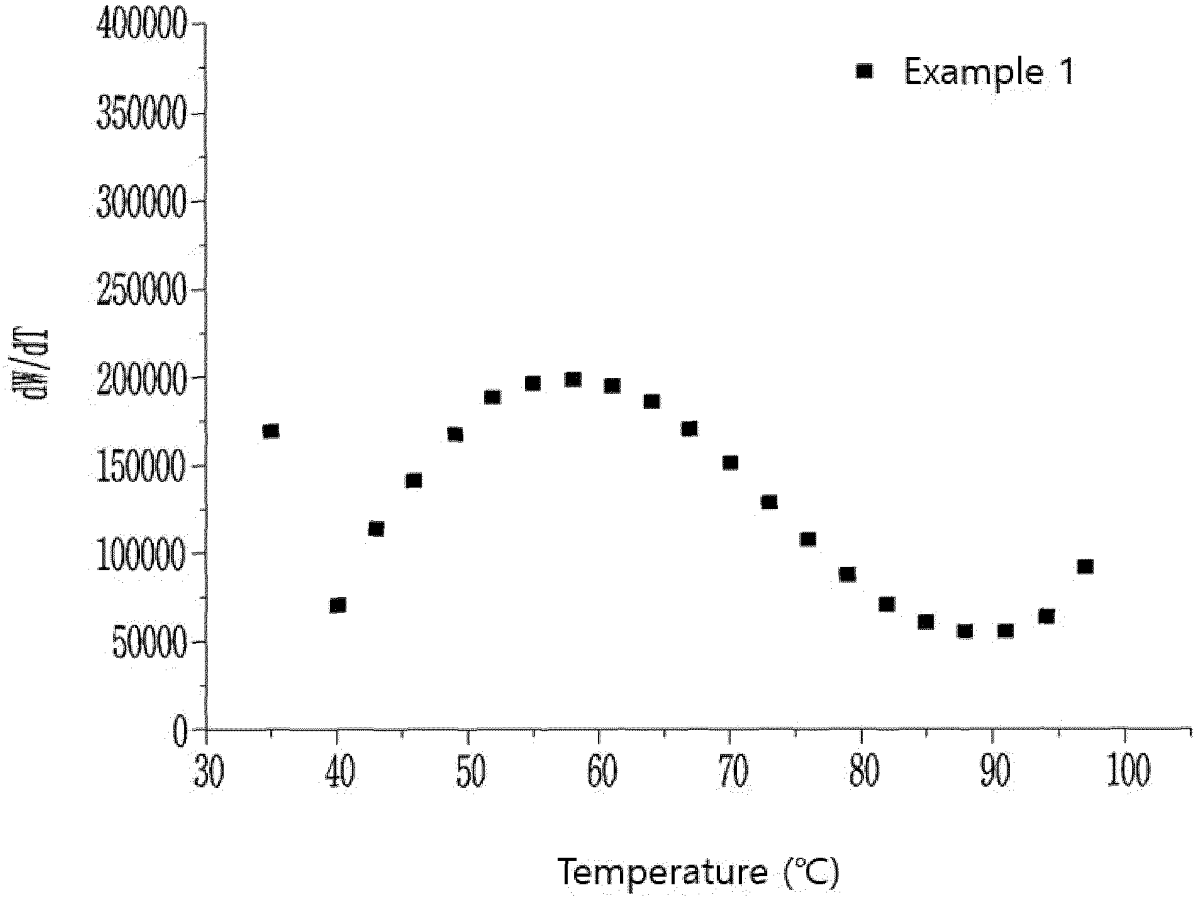
Example 1
dW/dT
Temperature (℃)
400000
350000
300000
250000
200000
150000
100000
50000
0
30
40
50
60
70
80
90
100

## Description

[TECHNICAL FIELD]

Cross-reference to Related Application

The present application is based on, and claims priority from, Korean Patent Application Nos. 10-2022-0144765 and 10-2023-0137792, filed on November 2, 2022 and October 16, 2023, respectively, the disclosures of which are hereby incorporated by reference herein in their entirety.

The present invention relates to a polyolefin exhibiting an excellent haze property along with a high drop impact strength property, and a film including the same.

[BACKGROUND ART]

Linear low-density polyethylene (LLDPE), which is prepared by copolymerization of ethylene and alpha olefin at a low pressure using a polymerization catalyst, is a resin that has a narrow molecular weight distribution and short chain branches of a certain length and does not have long chain branches. A linear low-density polyethylene film has high breaking strength and elongation, and excellent tear strength and drop impact strength, as well as general properties of polyethylene, and therefore, the use is increasing in stretch films, overlap films, and the like, to which application of the existing low-density polyethylene (LDPE) or high-density polyethylene (HDPE) is difficult.

With recent decarbonization, there is an increasing demand for high-performance linear low-density polyethylene to improve recyclability, and in addition, there is also an increasing demand for linear low-density polyethylene with excellent processability and drop impact strength.

Dart drop impact strength is a very important mechanical property that determines the resistance of a resin to various impacts. However, linear low-density polyethylene has disadvantages of poor blown film processability and low transparency as compared with excellent mechanical properties. The blown film is a film prepared by blowing air into molten plastic to inflate, and is also named an inflation film.

Generally, as the linear low-density polyethylene has a lower density, it has the characteristics of better transparency and higher dart drop impact strength. However, when a lot of alpha olefin comonomers are used to prepare low-density polyethylene, there is a problem that fouling may be frequently generated during a slurry polymerization process, and therefore, in the slurry polymerization process, products with a density of 0.915 g/cm$^3$ or more are mainly produced.

Accordingly, there is a demand for the development of a polyolefin that is able to realize high impact strength property and excellent transparency along with a density of 0.915 g/cm$^3$ or more.

[DETAILED DESCRIPTION OF THE INVENTION]

[TECHNICAL PROBLEM]

In order to solve the problems of the prior art, there is provided a polyolefin exhibiting excellent transparency along with a high impact strength property through control of the crystal structure.

There is also provided a film, specifically, a blown film including the polyolefin.

[TECHNICAL SOLUTION]

According to the present invention, there is provided a polyolefin satisfying the following requirements of (i) to (iii):

(i) a film haze parameter (Hp) defined by the following Equation 1 below: 12 or less

[Equation 1]

$$Hp = T_{eL} W_L M_L \times 10^{-8} + \frac{T_{eH} W_H}{M_H} \times 100$$

(in Equation 1,

$Te_L$ and Ten represent an elution temperature value of a lowest peak and an elution temperature value of a highest peak in a temperature rising elution fractionation (TREF) curve by a cross fraction chromatography (CFC) analysis, respectively,

$W_L$ and $M_L$ represent a content ratio (% by weight) value of a low crystalline polymer which is eluted in a region of an elution temperature of 75°C or lower, excluding a soluble fraction (SF) which is eluted in a region of an elution temperature of lower than 35°C, in the TREF curve, and a weight average molecular weight (g/mol) value of the low crystalline polymer, respectively, and

$W_H$ and $M_H$ represent a content ratio (% by weight) of a highly crystalline polymer which is eluted in a region of an elution temperature of higher than 75°C in the TREF curve, and a weight average molecular weight (g/mol) value of the highly crystalline polymer, respectively),

(ii) $A_H/A_1$ which is a peak height ratio in the temperature rising elution fractionation curve by the cross fraction chromatography analysis: 1.8 or more

(wherein $A_H$ represents a peak height of a highest peak in the TREF curve, and $A_1$ represents a peak height of a lowest peak when the lowest peak in the TREF curve exists at an elution temperature of 40°C to 75°C, and represents a height at an elution temperature of 65°C when the lowest peak in the TREF curve does not exist at an elution temperature of 40°C to 75°C, or when the lowest peak does not exist because the TREF curve has a single peak), and

(iii) a molecular weight distribution: 2.5 to 4.

There is also provided a film including the polyolefin.

[ADVANTAGEOUS EFFECTS]

A polyolefin according to the present invention exhibits excellent transparency along with a high impact strength property. Accordingly, it is useful in the production of films, specifically, blown films which require the high impact strength property and excellent transparency.

[BRIEF DESCRIPTION OF THE DRAWINGS]

FIG. 1a is a temperature rising elution fractionation (TREF) curve obtained through a cross fraction chromatography (CFC) analysis of a polyolefin of Example 1 and FIG. 1b is a graph showing a molecular weight in each elution region;

FIG. 2a is a TREF curve obtained through a CFC analysis of a polyolefin of Example 2 and FIG. 2b is a graph showing a molecular weight in each elution region;

FIG. 3a is a TREF curve obtained through a CFC analysis of a polyolefin of Example 3 and FIG. 3b is a graph showing a molecular weight in each elution region;

FIG. 4a is a TREF curve obtained through a CFC analysis of a polyolefin of Example 4 and FIG. 4b is a graph showing a molecular weight in each elution region; and

FIG. 5a is a TREF curve obtained through a CFC analysis of a polyolefin of Example 5 and FIG. 5b is a graph showing a molecular weight in each elution region.

[DETAILED DESCRIPTION OF THE EMBODIMENTS]

As used herein, the terms "the first", "the second", and the like are used to describe a variety of components, and these terms are merely employed to differentiate a certain component from other components.

Further, the terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, numbers, steps, components, or combinations thereof, and do not exclude the existence or the possibility of addition of one or more different characteristics, numbers, steps, components or combinations thereof beforehand.

In the present invention, room temperature means 20±5°C.

The present invention may be variously modified and have various forms, and specific embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, a polyolefin of the present invention and a film including the same will be described in detail.

The polyolefin according to the present invention satisfies the following requirements of (i) to (iii):

(i) a film haze parameter (Hp) defined by the following Equation 1 below: 12 or less

[Equation 1]

$$Hp = T_{eL}W_LM_L \times 10^{-8} + \frac{T_{eH}W_H}{M_H} \times 100$$

(in Equation 1,

$Te_L$ and Ten represent an elution temperature value of a lowest peak and an elution temperature value of a highest peak in a temperature rising elution fractionation (TREF) curve (X axis: elution temperature (°C), Y axis: elution amount (dw/dt)) by a cross fraction chromatography (CFC) analysis, respectively,
$W_L$ and $M_L$ represent a content ratio (% by weight) value of a low crystalline polymer which is eluted in a region of an elution temperature of 75°C or lower, excluding a soluble fraction (SF) which is eluted in a region of an elution temperature of lower than 35°C, in the TREF curve, and a weight average molecular weight (g/mol) value of the low crystalline polymer, respectively, and
$W_H$ and $M_H$ represent a content ratio (% by weight) of a highly crystalline polymer which is eluted in a region of an elution temperature of higher than 75°C in the TREF curve, and a weight average molecular weight (g/mol) value of the highly crystalline polymer, respectively),

(ii) $A_H/A_1$ which is a peak height ratio in the temperature rising elution fractionation curve by the cross fraction chromatography analysis: 1.8 or more
(wherein $A_H$ represents a peak height of a highest peak in the TREF curve, and $A_1$ represents a peak height of a lowest peak in the TREF curve when the lowest peak exists at an elution temperature of 40°C to 75°C, or represents a height at an elution temperature of 65°C when the lowest peak in the TREF curve does not exist at an elution temperature of 40°C to 75°C, i.e., when the lowest peak exists in the temperature range outside the elution temperature of 40°C to 75°C, or when the lowest peak does not exist because the TREF curve has a single peak), and
(iii) a molecular weight distribution: 2.5 to 4.

Blown film extrusion, which is used in the production of packaging materials and various industrial films, is a method of mass-producing a film with a uniform thickness and surface by generating air flow to expand the film which is extruded from a die through a screw. The method is mainly used to produce films with a relatively low melt index (MI) of approximately 0.5 to 2.0. In the process of expanding the polymer melt with air, uniform orientation may be provided in the mechanical direction (MD) and the direction perpendicular to stretching (transverse direction, TD), thereby securing excellent mechanical properties.
However, due to the method of generating the bubble shape and controlling the degree of cooling through air, transparency is not as good as that of cast film extrusion. Therefore, a method of improving the film surface by blending LDPE with LLDPE is mainly used. However, in this case, there is a problem that the mechanical properties of the film are greatly reduced.
For this reason, it is necessary to develop a polyolefin having excellent basic mechanical properties while having excellent haze property even without blending with LDPE, and to quantify the corresponding structure.
Accordingly, in the present invention, the polyolefin is defined by the film haze parameter, and its mechanical properties and transparency are optimized to excellent ranges at the same time.
The film haze parameter defines a structure capable of securing excellent transparency in the BOCD structure.
Specifically, through CFC analysis using 1,2,4-trichlorobenzene as a solvent, after separating into low-crystalline and high-crystalline regions, based on the elution temperature of 75°C, $W_L$ and $M_L$ are defined as a content ratio (% by weight) and a weight average molecular weight in the low-crystalline region at 75°C or lower, respectively.
When a linear low-density polyethylene film has a BOCD structure, the TREF crystalline region is widely distributed to have two or more peaks. This indicates coexistence of molecular chains, which contain few short chain branches (SCBs) to exhibit high crystallinity, and chains, which contain a large amount of SCBs to form a macrostructure in which lamellar and tie molecules are mixed.
$W_L$ and $M_L$ represent quantification of the section in which tie molecules are highly likely to be formed. Only when an appropriate level or more of a molecular weight is secured, excellent drop impact strength and impact resistance may be achieved due to tie molecules. $W_H$ and $M_H$ represent the section vulnerable to impact due to low crystallinity, but strength

and stiffness may be strengthened only when 50% by weight to 60% by weight thereof is included in the polymer. In addition, only when a specific range of molecular weight, e.g., 70,000 g/mol to 110,000 g/mol is secured, the relaxation time may be increased during the film cooling process, thereby suppressing excessive growth of a macromolecule structure with spherulitic morphology, and as a result, transparency may be controlled. However, when $W_H$ and $M_H$ are excessively high, physical properties may deteriorate, and therefore, it is desirable that $W_H$ is 60 or less and $M_H$ is 110,000 or less.

Under the above conditions, a new parameter to compare the difference in haze due to the polymer structure, i.e., film haze parameter, was introduced.

When the molecular weight and content of the low crystalline region must not be excessively high, it is possible to control light scattering due to the lamellar-tie molecular structure. In addition, when the molecular weight of the highly crystalline region is high, spherulite growth may be suppressed by increasing the relaxation time. However, when the content is excessively high, transparency may be impaired due to high crystallinity.

For example, in the TREF curve, when the peak is not visible or the peak height is low in the low crystalline region of the elution temperature of 40°C to 75°C, even though the content of highly crystalline polymer eluted in the region of the elution temperature of 75°C or higher is sufficient, nuclei where crystallization occurs due to high crystallinity may be quickly generated. Further, when the molecular weight of the polymer in the corresponding highly crystalline region is large or small, the speed at which the molecular chain moves during the crystallization process may be affected. If the polymer in the highly crystalline region has a relatively large molecular weight, the chain movement slows down, resulting in insufficient crystal growth at the nucleation site and the formation of small spherulites, which may reduce roughness and scattering, and as a result, the haze property may be improved. However, when the polymer in the highly crystalline region has a relatively small molecular weight, large spherulites are formed due to the growth of the crystal structure, which increases roughness and scattering, resulting in poor haze property.

The present inventors expressed the relationship thereof in a linear equation as in Equation 1 above.

In Equation 1, $Te_L W_L M_L \times 10^{-8}$ represents a light scattering-related haze factor due to low crystallinity, and $(Te_H W_H/M_H) \times 100$ represents a haze factor due to high crystallinity, and $Te_L$ and Ten represent an elution temperature of a lowest TREF peak and an elution temperature of a highest TREF peak, respectively, and may be considered as values representing crystallinity in the temperature ranges classified into low crystallinity and high crystallinity.

The polyolefin according to the present invention exhibits a film haze parameter (Hp) of 12 or less, which is defined by Equation 1, more specifically, Hp of 12 or less, or 11.8 or less, or 11.6 or less, and 8 or more, or 8.3 or more, or 8.5 or more. Accordingly, the polyolefin may exhibit high transparency along with the excellent impact strength property.

The polyolefin according to the present invention has a peak height ratio $A_H/A_1$ of 1.8 or more in the TREF curve by CFC analysis.

Here, $A_H$ represents a peak height of a highest peak in the temperature rising elution fractionation curve, and $A_1$ represents a peak height of a lowest peak in the temperature rising elution fractionation curve when the lowest peak exists at an elution temperature of 40°C to 75°C, or represents a height at an elution temperature of 65°C when the lowest peak in the temperature rising elution fractionation curve does not exist at an elution temperature of 40°C to 75°C, i.e., when the lowest peak exists in the temperature range outside the elution temperature of 40°C to 75°C, or when the lowest peak does not exist because the temperature rising elution fractionation curve has a single peak.

FIG. 1a shows $A_1$ and $A_H$ in the TREF curve of the polyolefin of Example 1 below. FIG. 1a is only an example for explaining the present invention, and the present invention is not limited thereto.

Referring to FIG. 1a, in the TREF curve of the polyolefin of Example 1, the highest peak appeared at an elution temperature of 89.4°C, and the lowest peak appeared at an elution temperature of 66.1°C. Accordingly, $A_H$ of the polyolefin of Example 1 is the peak height of the highest peak that appeared at the elution temperature of 89.4°C, and $A_1$ is the peak height of the lowest peak that appeared at the elution temperature of 66.1 °C.

The $A_H/A_1$ defines the relative amount of highly crystalline polymer eluted in the high temperature region. The polyolefin according to the present invention has a sufficient amount of highly crystalline polymer by satisfying the above-mentioned requirement. Accordingly, nuclei that crystallize in the high elution temperature region are slowly generated or do not sufficiently grow, resulting in the formation of small spherulites, which may lead to reduction in roughness and scattering, thereby exhibiting the improved haze property.

More specifically, $A_H/A_1$ of the polyolefin according to the present invention is 1.8 or more, or 1.81 or more, or 2 or more, or 2.4 or more, and 3 or less, or 2.8 or less, or 2.7 or less.

In addition, the polyolefin according to the present invention may exhibit superior physical properties by further satisfying the optimal ranges of requirements of $W_L$, $M_L$, $W_H$ and $M_H$, in addition to the requirements of Hp and $A_H/A_1$.

Specifically, the polyolefin has $W_L$ of 33 to 45, which represents a content ratio (% by weight) value of a low crystalline polymer which is eluted in a region of an elution temperature of 75°C or lower, e.g., in a region of an elution temperature of 35°C to 75°C, excluding a soluble fraction (SF), in the TREF curve by CFC analysis, and has $M_L$ of 130,000 or more, which represents a weight average molecular weight (g/mol) value of the low crystalline polymer. In this regard, the soluble fraction (SF) refers to a fraction which is eluted in a region of an elution temperature of lower than 35°C in the TREF curve. Further, the content ratio (% by weight) of the low crystalline polymer is based on the total weight of all eluted

fractions.

More specifically, $W_L$ may be 33 or more, or 35 or more, or 37 or more, or 37.5 or more, and 45 or less, or 42 or less, or 41.6 or less, and $M_L$ may be 130,000 or more, or 132,000 or more, and 250,000 or less, or 210,000 or less.

Further, the polyolefin has $W_H$ of 50 to 60, and $M_H$ of 70,000 to 110,000, which represent a content ratio (wt%) value of a highly crystalline polymer which is eluted in a region of an elution temperature of higher than 75°C in the TREF curve, and a weight average molecular weight(g/mol) of the highly crystalline polymer, respectively. More specifically, $W_H$ may be 50 or more, or 51 or more, and 60 or less, or 56 or less, and $M_H$ may be 70,000 or more, or 70,500 or more, and 110,000 or less, or 109,000 or less. In this regard, the content ratio (% by weight) of the highly crystalline polymer is based on the total weight of all eluted fractions.

Previously, a method of introducing long chain branches (LCBs) into mLLDPE was proposed in order to improve transparency. In general, mLLDPE with LCBs has significantly low $M_L$ and $W_L$ because its crystallization characteristics change unimodally. Specifically, the polyolefin of the present invention has $M_L$ of 130,000 or more, and $W_L$ of 33 to 45, while the existing mLLDPE with LCBs has $M_L$ of 20,000 to 60000, or 27,000 to 28000, and $W_L$ of 40 or less, or 20 to 40. Accordingly, the existing mLLDPE with LCBs has a reduced area where tie molecules are formed, due to low $M_L$ and $W_L$, making it difficult to exhibit sufficient dart drop impact strength, even though satisfying the requirement of the film haze parameter of the present invention.

Further, with regard to the polyolefin according to the present invention, $Te_L$, i.e., an elution temperature (°C) value of the lowest peak is 60 to 90, and Ten, i.e., an elution temperature value of the highest peak is 80 to 100 in the TREF curve. More specifically, $Te_L$ may be 60 or more, or 64 or more, and 90 or less, or 85 or less, and Ten may be 80 or more, or 85 or more, or 89 or more, and 100 or less, or 95 or less. These peak characteristics and the high $A_H/A_1$ value indicate that there is a high possibility that highly crystalline molecules are involved in the film manufacturing process, and as the $Te_L$ and Ten and $A_H/A_1$ values appear in the above range of elution temperature, the polyolefin may exhibit more improved effect in terms of haze.

More specifically, with regard to the polyolefin, the content ratio of the soluble fraction (SF) eluted in the region of the elution temperature of lower than 35°C in the TREF curve by CFC analysis may be 1% by weight or more, or 4% by weight or more, and 15% by weight or less, or 12% by weight or less, based on the total weight of all eluted fractions.

Further, with regard to the polyolefin, the content ratio of the fraction or polymer eluted in the region of the elution temperature of 35°C or higher and lower than 55°C may be 5% by weight or more, or 6% by weight or more, and 15% by weight or less, or 10% by weight or less, based on the total weight of all eluted fractions.

Further, with regard to the polyolefin, the content ratio of the fraction or polymer eluted in the region of the elution temperature of 55°C or higher and 75°C or lower may be 20% by weight or more, or 25% by weight or more, and 40% by weight or less, or 35% by weight or less, based on the total weight of all eluted fractions.

Further, with regard to the polyolefin, the content ratio of the fraction or highly crystalline polymer eluted in the region of the elution temperature of higher than 75°C may be 50% by weight or more, 51% by weight or more, and 60% by weight or less, or 56% by weight or less, based on the total weight of all eluted fractions, as described above.

Meanwhile, in the present invention, the content ratio of the fraction or polymer eluted in a certain elution temperature range is calculated as a percentage (% by weight or wt%) of the content ratio of the fraction or polymer eluted in the corresponding elution temperature range, based on the total weight of all eluted fractions obtained through CFC analysis.

Further, in the present invention, the crystal structure characteristics of the polyolefin may be determined through CFC analysis. The specific measurement method and measurement conditions are as described in Experimental Example below.

In addition to the above-described crystal structure characteristics, the polyolefin according to the present invention exhibits a molecular weight distribution of 2.5 to 4. More specifically, the polyolefin according to the present invention has a molecular weight distribution of 2.5 or more, or 2.8 or more, or 2.85 or more, or 2.87 or more, and 4 or less, or 3.8 or less. The polyolefin may exhibit excellent mechanical strength properties by having the above range of molecular weight distribution. When the molecular weight distribution of the polyolefin is less than 2.5, it is apprehended that processability and mechanical properties deteriorate, and when it exceeds 4, it is apprehended that haze property deteriorates.

Meanwhile, in the present invention, with regard to the molecular weight distribution of the polyolefin, MWD is determined by measuring Mw and Mn using gel permeation chromatography, respectively and then calculating a ratio (Mw/Mn) of Mw to Mn therefrom. The specific measurement method and conditions are as described in Experimental Example below.

In addition, the polyolefin according to the present invention exhibits a density of 0.915 g/cc to 0.925 g/cc, more specifically, 0.915 g/cc or more, or 0.917 g/cc or more, and 0.925 g/cc or less, or 0.920 g/cc or less, as measured according to ASTM D1505.

As the polyolefin exhibits the above range of density, it may exhibit excellent mechanical properties.

Further, the polyolefin according to the present invention may have a melt index ($MI_{2.16}$) of 0.5 g/10 min to 1.5 g/10

min, more specifically, 0.5 g/10 min or more, or 0.9 g/10 min or more, or 0.95 g/10 min or more, and 1.5 g/10 min or less, or 1.2 g/10 min or less, or 1.05 g/10 min or less, as measured according to ASTM D1238 standard at a temperature of 190°C under a load of 2.16 kg.

Further, the polyolefin may have a melt index ($MI_{21.6}$) of 10 g/10 min to 50 g/10 min, more specifically, 10 g/10 min or more, or 20 g/10 min or more, or 25 g/10 min or more, and 50 g/10 min or less, or 40 g/10 min or less, or 35 g/10 min or less, as measured according to ASTM D1238 standard at a temperature of 190°C under a load of 21.6 kg.

Further, the polyolefin may have a MFRR ($MI_{21.6}/MI_{2.16}$) of 20 to 30, more specifically, 20 or more, or 25 or more, or 26 or more, and 30 or less, or 29.5 or less, which is a ratio obtained by dividing the melt index ($MI_{21.6}$) measured according to ASTM D1238 standard at a temperature of 190°C under a load of 21.6 kg by the melt index ($MI_{2.16}$) measured at a temperature of 190°C under a load of 2.16 kg.

The polyolefin according to the present invention has the above-described crystal structure characteristics as well as the optimal ranges of density and melt index, thereby exhibiting remarkably improved impact strength property and transparency along with excellent processability.

The polyolefin according to the present invention is specifically a copolymer of ethylene and olefin monomer.

The olefinic monomer may be ethylene, alpha-olefin, cyclic olefin, a diene or triene olefin having two or more double bonds.

Specific examples of the olefinic monomer may include ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, norbornene, norbornadiene, ethylidenenorbornene, phenylnorbornene, vinylnorbornene, dicyclopentadiene, 1,4-butadiene, 1,5-pentadiene, 1,6-hexadiene, styrene, alpha-methylstyrene, divinylbenzene, 3-chloromethylstyrene, etc., and two or more of these monomers may be also mixed and copolymerized.

More specifically, the polyolefin is a copolymer of ethylene/C4-C10 alpha olefin, and much more specifically, a copolymer of ethylene/1-hexene.

The polyolefin having the above characteristics according to the present invention may be prepared by, for example, a preparation method including the step of subjecting ethylene and the olefin monomer to a slurry polymerization reaction while introducing hydrogen in the presence of a catalyst composition including a first transition metal compound represented by the following Formula 1 and a second transition metal compound represented by the following Formula 2 at a molar ratio of 1:1 to 1:3:

[Formula 1]

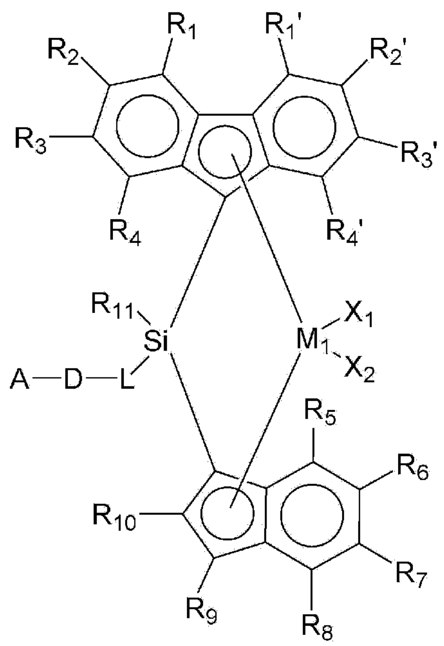

in Formula 1,

$R_1$ to $R_8$, and $R_1$' to $R_4$' are the same as or different from each other, and each independently hydrogen, halogen, a $C_{1-20}$ alkyl group, a $C_{2-20}$ alkenyl group, a $C_{6-20}$ aryl group, a $C_{7-20}$ alkylaryl group, or a $C_{7-20}$ arylalkyl group;

$R_9$ and $R_{10}$ are the same as or different from each other, and each independently hydrogen, a $C_{1-20}$ alkyl group, a $C_{2-20}$ alkenyl group, a $C_{6-20}$ aryl group, a $C_{7-20}$ alkylaryl group, or a $C_{7-20}$ arylalkyl group, or $R_{10}$ and $R_{11}$ may be connected to each other to form one or more aliphatic rings, aromatic rings, or hetero rings;

$R_{11}$ is hydrogen, halogen, a $C_{1-20}$ alkyl group, a $C_{2-20}$ alkenyl group, a $C_{6-20}$ aryl group, a $C_{7-20}$ alkylaryl group, or a $C_{7-20}$ arylalkyl group;

L is a $C_{1-10}$ linear or branched alkylene group;

D is -O-, -S-, -N(R)- or -Si(R)(R')-, wherein R and R' are the same as or different from each other, and each independently hydrogen, halogen, a $C_{1-20}$ alkyl group, a $C_{2-20}$ alkenyl group, or a $C_{6-20}$ aryl group;

A is hydrogen, a $C_{1-20}$ alkyl group, a $C_{2-20}$ alkenyl group, a $C_{6-20}$ aryl group, a $C_{7-20}$ alkylaryl group, or a $C_{7-20}$ arylalkyl group;

$M_1$ is a Group 4 transition metal;

$X_1$ and $X_2$ are the same as or different from each other, and each independently halogen, a $C_{1-20}$ alkyl group, a $C_{2-20}$ alkenyl group, a $C_{6-20}$ aryl group, a nitro group, an amido group, a $C_{1-20}$ alkylsilyl group, a $C_{1-20}$ alkoxy group, or a $C_{1-20}$ sulfonate group;

[Formula 2]

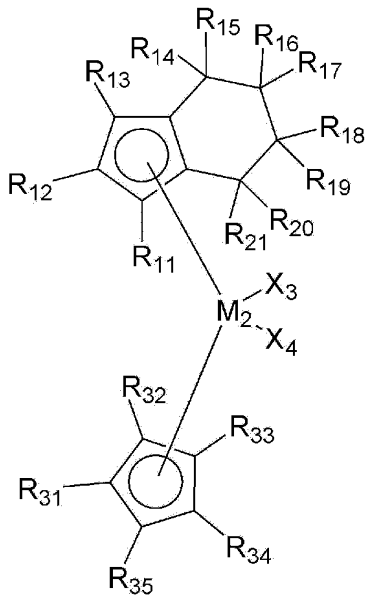

in Formula 2,

$R_{11}$ to $R_{21}$ are the same as or different from each other, and each independently hydrogen, halogen, a $C_{1-20}$ alkyl group, a $C_{2-20}$ alkenyl group, a $C_{6-20}$ aryl group, a $C_{7-20}$ alkylaryl group, or a $C_{7-20}$ arylalkyl group;

$R_{31}$ to $R_{35}$ are each independently, hydrogen, a $C_{1-20}$ alkyl group, a $C_{2-20}$ alkenyl group, a $C_{6-20}$ aryl group, a $C_{7-20}$ alkylaryl group, a $C_{7-20}$ arylalkyl group, a $C_{1-20}$ alkoxy group, a $C_{2-20}$ alkoxyalkyl group, or a $C_{7-30}$ aryloxyalkyl, wherein at least one of $R_{31}$ to $R_{35}$ is a $C_{1-20}$ alkyl group, a $C_{1-20}$ alkoxy group, a $C_{2-20}$ alkoxyalkyl group, or a $C_{7-30}$ aryloxyalkyl,

$M_2$ is a Group 4 transition metal; and

$X_3$ and $X_4$ are the same as or different from each other, and each independently halogen, a $C_{1-20}$ alkyl group, a $C_{2-20}$ alkenyl group, a $C_{6-20}$ aryl group, a nitro group, an amido group, a $C_{1-20}$ alkylsilyl group, a $C_{1-20}$ alkoxy group, or a $C_{1-20}$ sulfonate group.

In the transition metal compounds of Formulae 1 and 2, the substituents will be described in more detail below.

The $C_{1-20}$ alkyl group may include linear or branched alkyl groups, and specifically may include, but is not limited to, a methyl group, an ethyl group, a propyl group, an isopropyl group, an n-butyl group, a tert-butyl group, a pentyl group, a hexyl group, a heptyl group, an octyl group and the like.

The $C_{2-20}$ alkenyl group may include linear or branched alkenyl groups, and specifically may include, but is not limited to, an allyl group, an ethenyl group, a propenyl group, a butenyl group, a pentenyl group, and the like.

The $C_{6-20}$ aryl group may include monocyclic or fused cyclic aryl groups, and specifically may include, but is not limited to, a phenyl group, a biphenyl group, a naphthyl group, a phenanthrenyl group, a fluorenyl group, and the like.

The $C_{7-20}$ alkylaryl group, in which one or more hydrogens of aryl are substituted with alkyl, may specifically

include methylphenyl, ethylphenyl, n-propylphenyl, iso-propylphenyl, n-butylphenyl, iso-butylphenyl, tert-butylphenyl, cyclohexylphenyl, and the like.

The $C_{7-20}$ arylalkyl group is a substituent in which one or more hydrogens of alkyl are substituted with aryl, and specifically, $C_{7-40}$ arylalkyl may include a benzyl group, phenylpropyl, phenylhexyl, and the like.

The $C_{1-20}$ alkoxy group may include, but is not limited to, a methoxy group, an ethoxy group, a phenyloxy group, a cyclohexyloxy group, and the like.

The $C_{2-20}$ alkoxyalkyl group, in which one or more hydrogens of the alkyl group as described above are substituted with alkoxy groups, may specifically include, but is not limited to, alkoxyalkyl groups such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, a tert-butoxyhexyl group, and the like; or aryloxyalkyl groups such as a phenoxyhexyl group and the like.

The $C_{6-20}$ aryloxy group may specifically include, but is not limited to, phenoxy, biphenoxy, naphthoxy and the like.

Further, the $C_{5-20}$ heteroaryl group may include, but is not limited to, monocyclic or fused cyclic heteroaryl groups, and may include, but is not limited to, a carbazolyl group, a pyridyl group, a quinoline group, an isoquinoline group, a thiophenyl group, a furanyl group, an imidazole group, an oxazolyl group, a thiazolyl group, a triazine group, a tetrahydropyranyl group, a tetrahydrofuranyl group, and the like.

The halogen may be fluorine (F), chlorine (Cl), bromine (Br) or iodine (I).

The above-described substituents are optionally substituted with, within the range of achieving the same or similar effects as the desired effect, one or more substituents selected from the group consisting of a hydroxy group; halogen; an alkyl group or an alkenyl group, an aryl group, an alkoxy group; an alkyl group or an alkenyl group, an aryl group, an alkoxy group including one or more of hetero atoms of Group 14 to Group 16; a silyl group; an alkylsilyl group or an alkoxysilyl group; a phosphine group; a phosphide group; a sulfonate group; and a sulfonic acid.

Further, the Group 4 transition metal may include, but is not limited to, titanium (Ti), zirconium (Zr), hafnium (Hf) and the like.

In detail, the first transition metal compound of Formula 1 forms a structure in which fluorene derivatives are cross-linked by a bridge, and has an unshared electron pair capable of acting as a Lewis base in the structure of a ligand. Therefore, when supported on the surface having a Lewis acid characteristic of a support, it exhibits high polymerization activity even though supported. Further, as the first transition metal compound includes the electronically rich fluorene groups, it has high activity, thereby polymerizing high-molecular weight olefin-based polymers.

Specifically, in the first transition metal compound, $R_1$ to $R_4$, and $R_1$' to $R_4$' of Formula 1 are each independently hydrogen; a $C_{1-12}$ alkyl group such as a methyl group, an ethyl group, a propyl group, an isopropyl group, an n-butyl group, a tert-butyl group, a pentyl group, a hexyl group, a heptyl group, an octyl group, etc.; a $C_{6-12}$ aryl group such as a phenyl group, etc.; a $C_{7-13}$ alkylaryl group such as a 3,5-dimethylphenyl group, a t-butylphenyl group, etc.; a $C_{7-13}$ arylalkyl group such as a benzyl group, etc. More specifically, $R_1$ to $R_4$, and $R_1$' to $R_4$' of Formula 1 may be all hydrogens.

Further, in Formula 1, $R_5$ to $R_8$ may be each independently hydrogen; a $C_{1-12}$ alkyl group such as a methyl group, an ethyl group, a propyl group, an isopropyl group, an n-butyl group, a tert-butyl group, a pentyl group, a hexyl group, a heptyl group, an octyl group, etc.; a $C_{6-12}$ aryl group such as a phenyl group, etc.; a $C_{7-13}$ alkylaryl group such as a 3,5-dimethylphenyl group, a t-butylphenyl group, etc.; or a $C_{7-13}$ arylalkyl group such as a benzyl group, etc. More specifically, $R_5$ to $R_7$ may be all hydrogens, and $R_8$ may be hydrogen; a $C_{1-12}$ alkyl group such as a methyl group, an ethyl group, a propyl group, an isopropyl group, an n-butyl group, a tert-butyl group, a pentyl group, a hexyl group, a heptyl group, an octyl group, etc.; a $C_{6-12}$ aryl group such as a phenyl group, etc.; a $C_{7-13}$ alkylaryl group such as a 3,5-dimethylphenyl group, a t-butylphenyl group, etc.; or a $C_{7-13}$ arylalkyl group such as a benzyl group, etc.

Further, in Formula 1, $R_9$ and $R_{10}$ may be each independently hydrogen, a $C_{1-12}$ alkyl group, a $C_{2-12}$ alkenyl group, a $C_{6-12}$ aryl group, a $C_{7-13}$ alkylaryl group, or a $C_{7-13}$ arylalkyl group, or $R_9$ and $R_{10}$ may be connected to each other to form one or more aromatic rings. More specifically, in Formula 1, $R_9$ may be hydrogen, and $R_{10}$ may be a $C_{1-12}$ or $C_{1-6}$ alkyl group such as a methyl group, an ethyl group, a propyl group, an isopropyl group, an n-butyl group, a tert-butyl group, etc.; or $R_9$ and $R_{10}$ may be connected to each other to form a benzene ring.

Much more specifically, $R_5$ to $R_7$, and $R_9$ may be all hydrogens, and $R_8$ may be hydrogen; a $C_{6-12}$ aryl group such as a phenyl group, etc.; or a $C_{7-13}$ alkylaryl group such as a 3,5-dimethylphenyl group, a t-butylphenyl group, etc., and $R_{10}$ may be a $C_{1-6}$ alkyl group such as a methyl group, an ethyl group, a propyl group, an isopropyl group, an n-butyl group, a tert-butyl group, etc.; $R_5$ to $R_8$ may be all hydrogens, and $R_9$ and $R_{10}$ may be connected to each other to form a benzene ring.

Further, in Formula 1, $R_{11}$ may be more specifically a $C_{1-12}$ or $C_{1-6}$ alkyl group such as a methyl group, an ethyl group, a propyl group, an isopropyl group, an n-butyl group, a tert-butyl group, etc. Much more specifically, $R_{11}$ may be a methyl group or an ethyl group.

Further, in Formula 1, L may be specifically a $C_{4-8}$ linear or branched alkylene group. More specifically, L may be butylene, pentylene, or hexylene.

Further, in Formula 1, D may be specifically -O-.

Further, in Formula 1, A may be specifically hydrogen; a $C_{1-12}$ alkyl group such as a methyl group, an ethyl group, a propyl group, an isopropyl group, an n-butyl group, a tert-butyl group, a pentyl group, a hexyl group, a heptyl group, an octyl group, etc.; a $C_{6-12}$ aryl group such as a phenyl group, etc.; or a $C_{7-13}$ alkylaryl group such as a 3,5-dimethylphenyl group, a t-butylphenyl group, etc.; or a $C_{7-13}$ arylalkyl group such as a benzyl group, and more specifically, A may be hydrogen, a methyl group, an ethyl group, a propyl group, an isopropyl group, an n-butyl group, a tert-butyl group.

Further, in Formula 1, $M_1$ may be specifically zirconium (Zr) or hafnium (Hf), and more specifically zirconium (Zr).

Further, in Formula 1, $X_1$ and $X_2$ may be each independently halogen, and more specifically chlorine.

More specifically, the first transition metal compound represented by Formula 1 may be any one selected from the group consisting of the following compounds, but is not limited thereto:

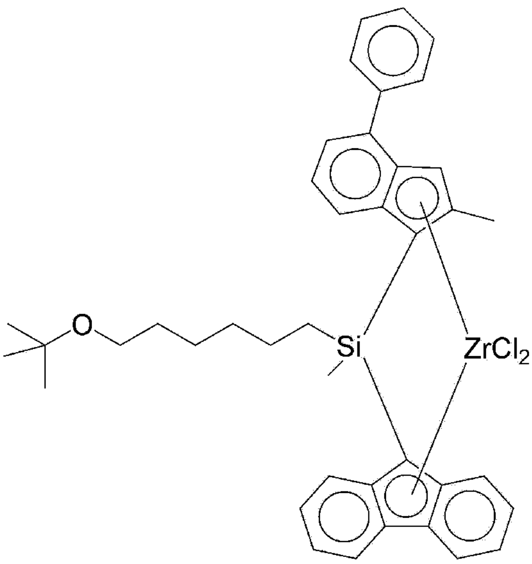

,

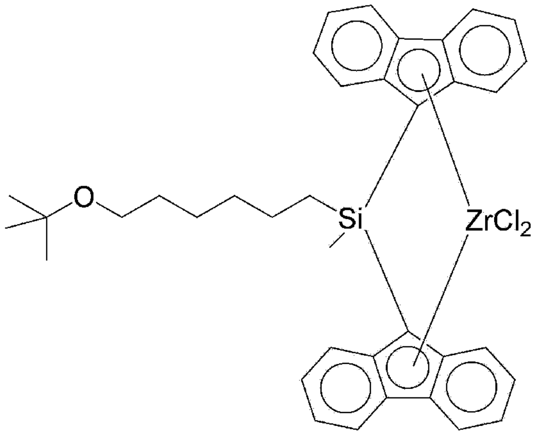

.

Meanwhile, the non-crosslinked second transition metal compound represented by Formula 2 has a tetrahydroindene structure, in which indene is reduced, along with a cyclopentadiene as ligands, and thus its hydrogen reactivity is relatively relaxed, making it easy to reduce the weight average molecular weight and to control PDI according to hydrogen input, as compared to the existing transition metal compounds for preparing a low-molecular-weight polymer, based on the indene structure.

Further, of the two ligands, with regard to the ligand of the tetrahydroindene structure, the cyclohexane structures of the tetrahydroindene structure are all unsubstituted, i.e., $R_{14}$ to $R_{21}$ are all hydrogens. Further, the cyclopentadiene structure in the tetrahydroindene structure is unsubstituted, i.e., $R_{11}$, $R_{12}$ and $R_{13}$ are all hydrogens; or at least one of carbons at positions 1 to 3, i.e., at least one of $R_{11}$, $R_{12}$, and $R_{13}$ is a $C_{1-12}$ alkyl group, a $C_{2-12}$ alkenyl group, a $C_{6-12}$ aryl group, a $C_{7-13}$ alkylaryl group, or a $C_{7-13}$ arylalkyl group, and the rest may be hydrogen. Considering the excellent improvement effect according to optimization of substituents, the ligands of the tetrahydroindene structure may be all unsubstituted, i.e., $R_{11}$ to $R_{21}$ may be all hydrogens.

Meanwhile, in Formula 2, with regard to the ligand of the cyclopentadiene structure, at least one of the substituents of $R_{31}$ to $R_{35}$ may be substituted. Specifically, at least one of $R_{31}$ to $R_{35}$ is a $C_{1-12}$ alkyl group, a $C_{1-12}$ alkoxy group, a $C_{2-12}$ alkoxyalkyl group, or a $C_{7-18}$ aryloxyalkyl group, and the rest may be hydrogen. More specifically, one of $R_{31}$ to $R_{35}$ is a $C_{1-12}$ alkyl group, a $C_{1-12}$ alkoxy group, or a $C_{2-12}$ alkoxyalkyl group, and the rest may be all hydrogens; or two of $R_{31}$ to $R_{35}$ are $C_{1-12}$ alkyl groups, and the rest may be all hydrogens; or $R_{31}$ to $R_{35}$ may be all $C_{1-12}$ alkyl groups.

Much more specifically, one of $R_{31}$ to $R_{35}$ is a $C_{1-6}$ alky group such as methyl, ethyl, propyl, or butyl; a $C_{1-6}$ alkoxy group such as methoxy, ethoxy, propoxy, or butoxy; or a $C_{2-12}$ alkoxyalkyl group such as t-butoxyhexyl, and the rest may be all hydrogens. Further, two of $R_{31}$ to $R_{35}$ are $C_{1-6}$ alky groups such as methyl, ethyl, propyl, or butyl, and the rest may be all hydrogens. Further, $R_{31}$ to $R_{35}$ are all $C_{1-4}$ alkyl groups such as methyl and ethyl.

Further, in Formula 2, $M_2$ may be specifically zirconium (Zr) or hafnium (Hf), and more specifically zirconium (Zr).

Further, in Formula 2, $X_3$ and $X_4$ may be each independently halogen, and more specifically chlorine.

More specifically, the second transition metal compound may be any one of compounds represented by the following formulae, but is not limited thereto:

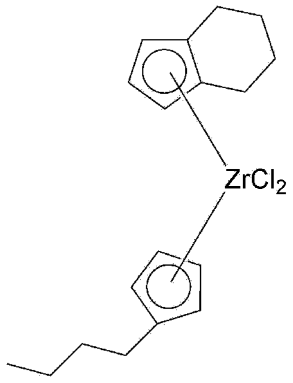
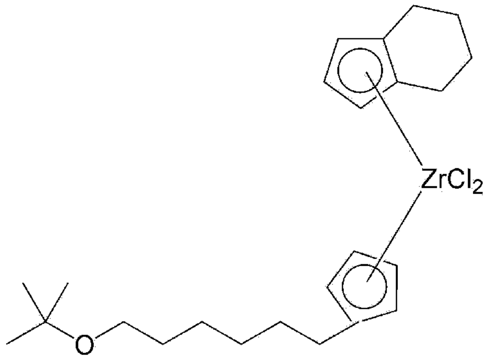
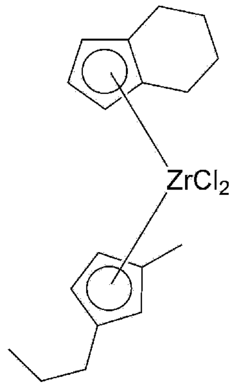
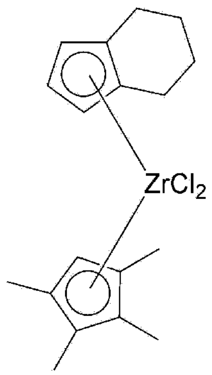

The above-described first and second transition metal compounds may be synthesized by applying known reactions, and for more detailed synthesis methods, Examples may be served as a reference.

Meanwhile, in the present invention, the first transition metal compound may be in the form of a meso isomer, a racemic isomer, or a mixed form thereof. In contrast, the second transition metal compound may include no meso isomer and no racemic isomer.

As used herein, the term "racemic form" or "racemate" or "racemic isomer" means a form in which the same substituents on two ligands are on the opposite side to the plane containing the transition metal represented by $M_1$ in Formula 1, for example, a transition metal such as zirconium (Zr) or hafnium (Hf) and the center of the ligand moiety.

Further, as used herein, the term "meso form" or "meso isomer" is a stereoisomer of the above-mentioned racemic isomer, and means a form in which the same substituents on two ligands are on the same side to the plane containing the transition metal represented by $M_1$ in Formula 1, for example, a transition metal such as zirconium (Zr) or hafnium (Hf) and the center of the ligand moiety.

In the hybrid supported catalyst according to one embodiment of the present disclosure, the first transition metal compound and the second transition metal compound may be supported at a molar ratio of 1:1 to 1:3, based on the first transition metal compound, considering the excellent catalytic activity and polymerizability.

When they are included at the above molar ratio, the catalyst exhibits high activity in the olefin polymerization, thereby preparing a polyolefin having improved drop impact strength and haze properties along with excellent processability. More specifically, the molar ratio may be 1:1 to 1:2, or 1:1 to 1:1.5, or 1:1.1 to 1:1.2.

Meanwhile, the first and second transition metal compounds may be used in the form of a supported catalyst of being supported on a silica support.

As the support, a support containing a hydroxyl group on the surface may be used, and preferably, it may contain highly reactive hydroxyl group and siloxane group on the surface, which is dried to remove water on the surface. For example, silica, silica-alumina, and silica-magnesia which are dried at a high temperature may be used. These supports may usually include oxide, carbonate, sulfate, and nitrate components such as $Na_2O$, $K_2CO_3$, $BaSO_4$, and $Mg(NO_3)_2$, etc.

When used as the supported catalyst, the produced polymer has excellent particle shape and bulk density, and the catalyst may be suitably used in traditional slurry polymerization, bulk polymerization, and gas phase polymerization processes. In addition, among various supports, silica supports support the transition metal compound by chemically binding functional groups thereof, and therefore, there is little catalyst released from the surface of the support during the polymerization process, and as a result, when the polyolefin is prepared by slurry polymerization or gas phase polymerization, a fouling phenomenon, sticking to the wall surface of the reactor or with itself, may be minimized.

Further, when supported on the support, the first and second transition metal compounds may be supported in the

content range of 0.01 mmol to 100 mmol, more specifically, 0.01 mmol or more, or 0.1 mmol or more, or 1 mmol or more, or 10 mmol or more, or 20 mmol or more, and 100 mmol or less, or 85 mmol or less, or 60 mmol or less, based on 1,000 g of the support. When supported within the above content range, the supported catalyst may exhibit appropriate catalytic activity, which may be advantageous in terms of maintaining catalytic activity and economic efficiency.

In addition, the catalyst may further include a cocatalyst in terms of improving the high activity and process stability.

The cocatalyst may include one or more compounds selected from compounds represented by the following Formula 3:

[Formula 3] $-[Al(R_a)-O]_m-$

in Formula 3,

$R_a$ are the same as or different from each other, and each independently halogen; a $C_{1-20}$ hydrocarbyl group; or a $C_{1-20}$ hydrocarbyl group substituted with halogen; and
m is an integer of 2 or more.

Examples of the compounds represented by Formula 3 may include alkyl aluminoxane-based compounds such as methyl aluminoxane, ethyl aluminoxane, isobutyl aluminoxane, or butyl aluminoxane, etc., and any one thereof or a mixture of two or more thereof may be used.

Among the above compounds, the cocatalyst may be more specifically an alkyl aluminoxane-based cocatalyst such as methyl aluminoxane.

The alkyl aluminoxane-based cocatalyst stabilizes the transition metal compound and acts as a Lewis acid, thereby further improving the catalytic activity by including a metal element capable of forming a bond through a Lewis acid-base interaction with the functional group which is introduced into the bridge group of the transition metal compound.

In addition, the amount of the cocatalyst to be used may be appropriately adjusted depending on the physical properties or effects of the desired catalyst and polymer, and a polyolefin including the same. The cocatalyst may be supported in an amount of 100 g or more, or 500 g or more, or 700 g or more, and 1,000 g or less, or 900 g or less, or 800 g or less, based on the weight of the support, e.g., 1,000 g of silica.

The catalyst having the above-described structure may be prepared by a preparation method including the step of supporting the cocatalyst compound on the support, and the step of supporting the first and second transition metal compounds on the support, wherein the supporting order of the cocatalyst and the first and second transition metal compounds may vary as needed.

Considering the effect of the supported catalyst with the structure which is determined according to the supporting order, supporting the first and second transition metal compounds after supporting the cocatalyst on the support ensures that the prepared supported catalyst has high catalytic activity and superior process stability in the polymer preparation process. Further, the supporting order of the first and second transition metal compounds is also not particularly limited, and the second transition metal compound may be supported after supporting the first transition metal compound, or they may be supported in the opposite order. Alternatively, the first and second transition metal compounds may be supported at the same time.

Meanwhile, the polymerization reaction for preparing the polyolefin is performed under conditions of introducing hydrogen gas.

Specifically, the hydrogen gas may be introduced in an amount of 5 ppm to 30 ppm, based on the total weight of olefin monomer. More specifically, the hydrogen gas may be introduced in an amount of 5 ppm or more, or 10 ppm or more, or 15 ppm or more, and 30 ppm or less, or 28 ppm or less, based on the total weight of olefin monomer.

The hydrogen gas activates the inactive site of the metallocene catalyst and causes a chain transfer reaction to control the molecular weight. The transition metal compound used in the present invention has excellent hydrogen reactivity, and therefore, by controlling the amount of hydrogen gas used during the polymerization process, a polyolefin having desired levels of molecular weight and melt index may be effectively obtained.

The polymerization process may be performed by a continuous polymerization process, for example, may employ various polymerization processes known as polymerization reactions of olefin monomers, such as a continuous solution polymerization process, a bulk polymerization process, a suspension polymerization process, a slurry polymerization process or an emulsion polymerization process, etc. However, in the present invention, a slurry polymerization process is performed to realize the above-described physical properties of polyolefin.

Further, the polymerization reaction may be performed at a temperature of 60°C or higher, or 70°C or higher, or 80°C or higher, 90°C or lower, or 85°C or lower. Further, the polymerization reaction may be performed under a pressure of 10 bar or more, or 20 bar or more, and 50 bar or less, or 40 bar or less. When polymerization is allowed under such temperature and pressure, the desired physical properties of polyolefin may be more easily realized.

The polyolefin prepared by the above-described preparation method has a crystal structure capable of securing excellent transparency along with the BOCD structure, as described above, thereby exhibiting transparency along with excellent dart drop impact strength property. Accordingly, the polyolefin may be useful in the production of films, specifically, blown films, which require high mechanical properties along with excellent transparency.

Accordingly, the present invention provides a resin composition including the polyolefin, specifically, a composition for producing a film.

Further, the present invention provides a film, specifically, a blown film which is produced by using the polyolefin or the resin composition.

The film according to the present invention may be produced according to a common film production method, except for using the polyolefin. For example, the film may be produced by mixing the polyolefin, and optionally, additives such as antioxidants and processing aids to prepare a composition for producing a film, and extruding the composition into a film using an extruder.

In addition, the film may exhibit excellent transparency and mechanical properties by including the polyolefin.

Specifically, the film has a dart drop impact strength of 1600 gf or more, or 1800 gf or more, as measured according to the Method A of ASTM D 1709, under conditions of a Blown-Up Ratio (BUR) of 2.3 to 3, more specifically 2.5 to 3, and much more specifically 2.5, and a film thickness of 50 μm to 65 μm, and has a haze of 15% or less, or 14% or less, as measured according to ISO 13468 standard.

Further, the film has a dart drop impact strength of 1000 g or more, as measured according to the Method A of ASTM D 1709, under conditions of BUR of 2.3 to 3, more specifically 2.5 to 3, and much more specifically 2.5, and a film thickness of 20 μm to 30 μm, and has a haze of 10% or less, as measured according to ISO 13468 standard. As the dart drop impact strength is higher, the film is better, and therefore, the upper limit is not particularly limited. However, the dart drop impact strength may be, for example, 3000 gf or less. Also, as the haze is lower, the film is better, and therefore, the lower limit is not particularly limited. However, the haze may be, for example, 1% or more.

Hereinafter, preferred exemplary embodiments will be provided for better understanding of the present invention. However, the following exemplary embodiments are provided only for understanding the present invention more easily, but the content of the present invention is not limited thereby.

**Synthesis Example 1**

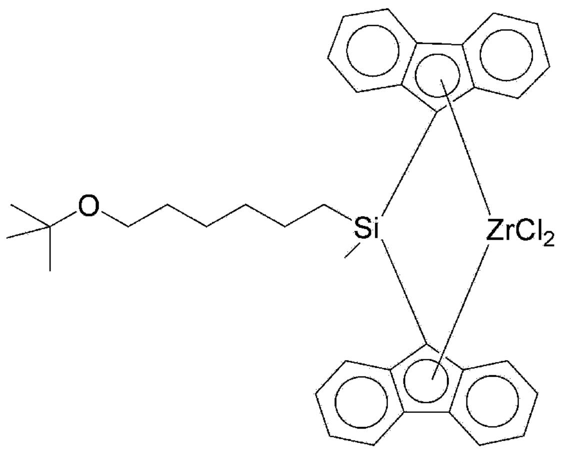

(A-1)

**Preparation of ligand compound**

To 100 mL of a trichloromethylsilane solution (about 0.21 mol, hexane), 100 mL of a t-butoxyhexyl magnesium chloride solution (about 0.14 mol, ether) was slowly added dropwise at -100°C over 3 hours, followed by stirring at room temperature for 3 hours. After separating a transparent organic layer from the mixed solution, the separated transparent organic layer was vacuum-dried to remove excess trichloromethylsilane. As a result, a transparent liquid (6-t-butoxyhexyl) dichloromethylsilane was obtained (yield of 84%).

1H NMR(500 MHz, CDCl3, 7.24 ppm): 0.76(3H, s), 1.11(2H, t), 1.18(9H,s), 1.32~1.55(8H, m), 3.33(2H, t)

Fluorene (100 mmol) and methyl tert-butyl ether (MTBE, 0.3 M) were put in a reactor at -20°C, and then n-BuLi (1.05 eq, 2.5 M in Hexane) was slowly added, and stirred at room temperature for 6 hours to prepare a fluorenyl lithium solution. After the stirring was finished, the temperature of the reactor was cooled to -30°C, and tert-Bu-O-$(CH_2)_6SiMeCl_2$

(0.505 eq) was added to the prepared fluorenyl lithium solution at -30°C, and washed with MTBE (50 mL). After stirring at room temperature for 8 hours or longer, the solution was extracted by adding water, and dried (evaporation) to obtain a (tert-Bu-O-$(CH_2)_6$)MeSi(9-$C_{13}H_{10}$)$_2$ compound. The structure of the ligand was identified by 1H-NMR.

1H NMR (500MHz, CDCl3): -0.35 (3H, s), 0.25 (2H, m), 0.59 (2H, m), 0.95 (4H, m), 1.17 (9H, s), 1.31 (2H, m), 3.23 (2H, t), 4.11 (2H, s), 7.25 (4H, m), 7.37 (4H, m), 7.42 (4H, m), 7.86 (4H, d).

**Preparation of transition metal compound**

n-BuLi (2.05 eq, 2.5 M in Hexane) was slowly added to the (tert-Bu-O-$(CH_2)_6$)MeSi(9-$C_{13}H_{10}$)$_2$ (100 mmol)/MTBE (0.4 M) solution at -20°C, and the solution was reacted for 8 hours or longer with elevating the temperature to room temperature to prepare a dilithium salt slurry solution. At -20°C, the prepared dilithium salt slurry solution was slowly added to a $ZrCl_4(THF)_2$ (1 eq, 100 mmol)/hexane (1 M) slurry solution, and further reacted for 8 hours at room temperature. The resulting reaction product was vacuum-dried to completely remove the solvent. DCM (0.43 M) was added to the resulting dry product, and then hexane (0.32 M) was further added. The resulting precipitate (LiCl) was filtered, and the filtrate was vacuum-dried. Hexane (0.3 M) was added to the resulting dry product to prepare a slurry, followed by filtration. The resulting filtrate was washed with hexane several times to obtain a red solid form of tert-Bu-O-$(CH_2)_6$)MeSi(9-$C_{13}H_9$)$_2$$ZrCl_2$ compound(A-1) (52.1g, yield of 75.4%).
1H NMR(500MHz, C6D6) : 1.16(9H, s), 1.27 (3H, s), 1.59 (2H, m), 1.68 (4H, m), 1.93(4H, m), 3.33(2H, t), 6.90 (4H, m), 7.15 (4H, m), 7.60 (4H, dd), 7.65(2H, d), 7.78(2H, d)

**Synthesis Example 2**

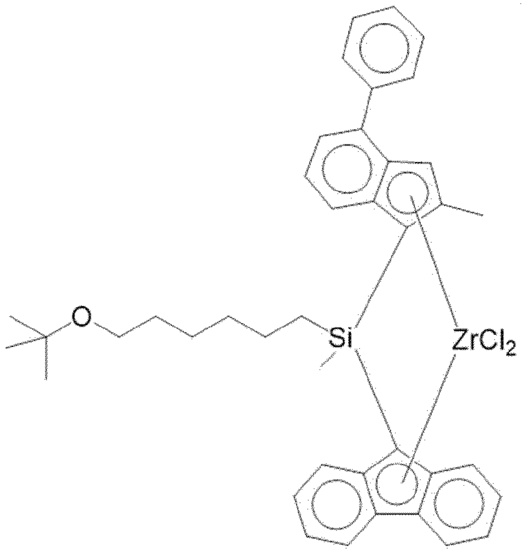

(A-2)

**Preparation of ligand compound**

Fluorene (100 mmol) and methyl tert-butyl ether (MTBE, 0.3 M) were put in a reactor at -20°C, and then n-BuLi (1.05 eq, 2.5 M in Hexane) was slowly added, and stirred at room temperature for 6 hours to prepare a fluorenyl lithium solution. After the stirring was finished, the temperature of the reactor was cooled to -30°C, and tert-Bu-O-$(CH_2)_6SiMeCl_2$ (1.0 eq) was added to the prepared fluorenyl lithium solution at -30°C, and washed with MTBE (50 mL), and then re-introduced. As a result, tert-Bu-O-$(CH_2)_6$SiMeCl(9-$C_{13}H_{10}$) was prepared.

In a separate reactor, 2-methyl-4-phenyl-indene (1.0 eq, 100 mmol) and MTBE (0.3 M) were put at -20°C, and n-BuLi (1.05 eq, 2.5 M in Hexane) was slowly added, and then stirred at room temperature for 6 hours to prepare lithiated 2-methyl-4-phenyl-indene.

The reactor containing the prepared tert-Bu-O-$(CH_2)_6$SiMeCl(9-$C_{13}H_{10}$) was cooled to - 30°C, and then the lithiated 2-methyl-4-phenyl-indene was introduced and reacted at room temperature for 8 hours or longer under stirring. The resulting product was extracted by adding water, and dried (evaporation) to obtain a ligand compound of (tert-Bu-O-$(CH_2)_6$)MeSi(9-$C_{13}H_{10}$)(2-Me-4-Ph-Indene). The structure of the ligand was identified by 1H-NMR.

1H NMR(500MHz, CDCl3) : -0.10 (3H, s), 0.58 (2H, m), 1.08 (2H, m), 1.23 (9H, s), 1.38 (4H, m), 1.62 (2H, m), 2.26

(3H, s), 3.28 (2H, t), 3.81 (1H, s), 4.11 (1H, s), 6.87(1H, s), 7.24 (3H, m), 7.36 (3H, m), 7.44 (4H, m), 7.53 (2H, t), 7.61 (2H, d), 7.86 (2H, d).

**Preparation of transition metal compound**

n-BuLi (2.05 eq, 2.5M in Hexane) was slowly added to the (tert-Bu-O-$(CH_2)_6$)MeSi(9-$C_{13}H_{10}$)(2-Me-4-Ph-Indene) (100 mmol)/MTBE (0.4 M) solution at -20°C, and the solution was reacted for 8 hours or longer with elevating the temperature to room temperature to prepare a dilithium salt slurry solution.

At -20°C, the prepared dilithium salt slurry solution was slowly added to a $ZrCl_4(THF)_2$ (1 eq, 100 mmol)/hexane (1 M) slurry solution, and further reacted for 8 hours at room temperature. The resulting reaction product was vacuum-dried to completely remove the solvent. DCM (0.43 M) was added to the resulting dry product, and then hexane (0.32 M) was further added. The resulting precipitate (LiCl) was filtered, and the filtrate was vacuum-dried. Hexane (0.3 M) was added to the resulting dry product to prepare a slurry, followed by filtration. The filtrate was washed with hexane several times to obtain a red solid form of (tert-Bu-O-$(CH_2)_6$)MeSi(9-$C_{13}H_9$)(2-Me-4-Ph-Indene)$ZrCl_2$ compound(A-2) (37.8 g, yield of 64.0%).

1H NMR(500MHz, C6D6) : 1.17(9H, s), 1.30 (3H, s), 1.57 (2H, m), 1.66 (4H, m), 1.86(4H, m), 2.26 (3H, s), 3.32(2H, t), 6.90 (2H, m), 6.95 (1H, s), 7.14 (3H, m), 7.36 (1H, d), 7.45 (3H, t), 7.61 (4H, m), 7.65(1H, d), 7.78(1H, d)

**Synthesis Example 3**

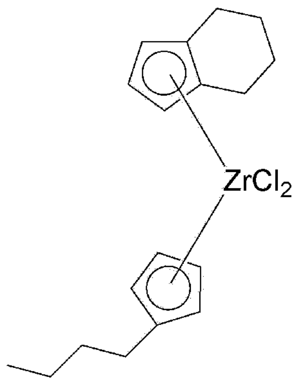

(B-1)

n-BuLi (1.05 eq) was slowly added at -25°C to a solution in which indene (1 eq) was dissolved in THF (0.3 M), and stirred at room temperature for 3 hours. TMSCl ($(CH_3)_3SiCl$) (1.05 eq) was added at -25°C to the resulting reaction product, followed by stirring at room temperature overnight. The resulting reaction product was dried to completely remove the solvent, and $ZrCl_4$ (1 eq) was added, toluene (0.5 M) was introduced, and stirred overnight at reflux. The resulting reaction product was cooled to room temperature, and then hexane (0.5 M) was introduced, and filtered to obtain an indene-$ZrCl_3$ solid.

In a separate reactor, n-BuLi (1.05 eq) was slowly added dropwise at -25°C to a solution in which n-butylcyclopentadiene (1 eq) was dissolved in THF (0.3 M), and then stirred at room temperature for 3 hours. The indene-$ZrCl_3$ (1eq) prepared above was introduced to the resulting reaction product at -25°C, followed by stirring at room temperature overnight. The resulting reaction product was dried to completely remove the solvent, and then hexane was introduced, and solids were filtered to obtain an n-BuCp-$ZrCl_2$-Indene intermediate.

The obtained intermediate and Pd/C (Pd content =10wt%, based on the total weight of C, corresponding to 0.1 mol, based on 1 mol of the intermediate) were introduced into a parr reactor (600 ml) using DCM (0.3 M), and then 15 bar of hydrogen gas was introduced and reacted under stirring at 40°C overnight. After completion of the reaction, hydrogen gas remaining in the reactor was vented, and the final product and Pd/C in the parr reactor were filtered out using a cannula and washed with DCM. The filtrate was vacuum-dried, and hexane was added, followed by filtration, and a compound (B-1) of the above structure was obtained in a solid phase.

1H NMR(500MHz, CDCl3) : 1.11(3H, t), 1.50 (2H, m), 1.62 (2H, m), 1.70 (2H, m), 1.90 (2H, m), 2.53(2H, m), 2.78 (2H, t), 2.90(2H, m), 5.48 (2H, s), 5.93 (1H, s), 6.22 (2H, d), 6.35 (2H, d)

**Synthesis Example 4**

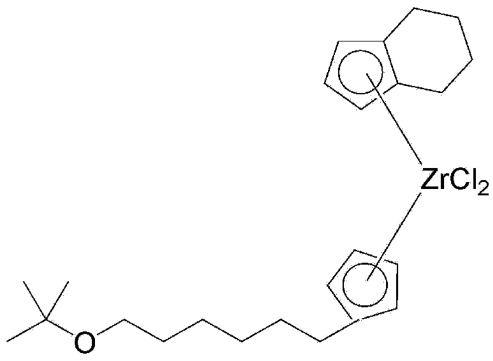

(B-2)

A compound (B-2) of the above structure was obtained in a solid phase in the same manner as in Synthesis Example 3, except that t-butoxyhexyl-cyclopentadiene was used instead of n-butyl-cyclopentadiene.
1H NMR(500MHz, CDCl3) : 1.23(9H, s), 1.40 (4H, m), 1.64 (6H, m), 1.88 (2H, m), 2.52(2H, m), 2.68 (2H, t), 2.91 (2H, m), 3.34(2H, t), 5.49 (2H, s), 5.94 (1H, s), 6.18 (2H, d), 6.28 (2H, d)

**Synthesis Example 5**

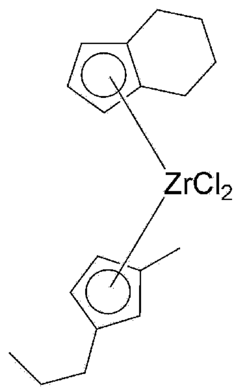

(B-3)

A compound (B-3) of the above structure was obtained in a solid phase in the same manner as in Synthesis Example 3, except that 1-methyl-3-propyl-1,3-cyclopentadiene was used instead of n-butyl-cyclopentadiene.
1H NMR(500MHz, CDCl3) : 0.93(3H, t), 1.350 (2H, m), 1.49 (2H, m), 1.63 (2H, m), 1.89 (2H, m), 2.22 (3H, s), 2.47 (1H, m), 2.55 (3H, m), 2.90 (2H, m), 5.48 (2H, s), 5.93 (2H, m), 5.98 (1H, m), 6.09 (1H, m)

**Synthesis Example 6**

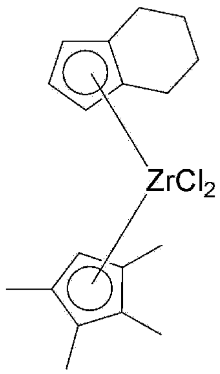

(B-4)

A compound (B-4) of the above structure was obtained in a solid phase in the same manner as in Synthesis Example 3, except that 1,2,3,4-tetramethyl-1,3-cyclopentadiene was used instead of n-butyl-cyclopentadiene.
1H NMR(500MHz, CDCl3) : 1.64 (2H, m), 1.87 (2H, m), 2.05 (12H, s), 2.54 (2H, m), 2.89 (2H, m), 5.62 (2H, d), 5.95 (1H, s), 6.18 (1H, t)

Comparative Synthesis Example 1

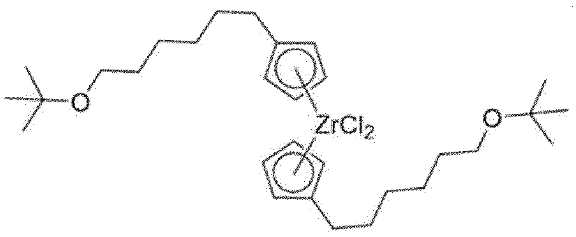

(C-1)

A transition metal compound (C-1) of the above structure was prepared in the same manner as in Comparative Synthesis Example 2 in Korean Patent Publication No. 10-2022-0067494.

Comparative Synthesis Example 2

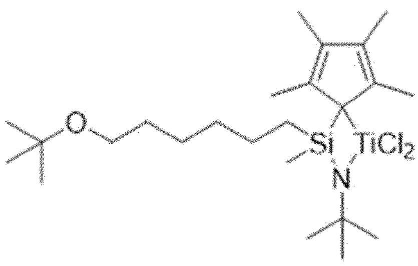

(C-2)

A transition metal compound (C-2) of the above structure was prepared in the same manner as in Preparation Example 1 in Korean Patent Publication No. 10-2016-0067508.

Comparative Synthesis Example 3

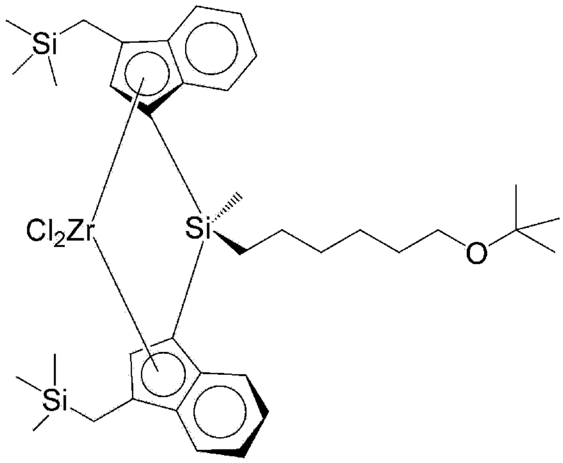

(D)

A transition metal compound (D) of the above structure was prepared in the same manner as in Preparation Example 2 in Korean Patent Publication No. 10-2016-0029718.

**Preparation Example 1**

2.0 kg of toluene and 700 g of silica (SYLOPOL 952X, manufactured by Grace Davision) were introduced into a 20 L sus autoclave, and stirred while raising the reactor temperature to 40°C. 5.4 kg of methylaluminoxane solution (10 wt% in toluene, manufactured by Albemarle) was introduced into the reactor, and the temperature was raised to 70°C, followed by stirring at about 200 rpm for about 12 hours.

Thereafter, the temperature of the reactor was lowered to 40°C, and stirring was stopped. The reaction product was allowed to settle for about 10 minutes, followed by decantation. 2.0 kg of toluene was added to the reaction product, and stirred for 10 minutes, the stirring was stopped, and then the solution was allowed to settle for about 30 minutes, followed by decantation.

To the reactor, 2.0 kg of toluene was introduced, and subsequently, the compound (A-1) (20 mmol) prepared in Synthesis Example 1 as the first transition metal compound and the compound (B-1) (40 mmol) prepared in Synthesis Example 3 as the second transition metal compound, and 1000 mL of toluene were introduced. The temperature of the reactor was raised to 85°C, followed by stirring for about 90 minutes. Then, the temperature of the reactor was lowered to room temperature, and the stirring was stopped, and the reaction product was allowed to settle for about 30 minutes, followed by decantation of the reaction product. Subsequently, 3 kg of hexane was introduced into the reactor, and the hexane slurry solution was transferred to a 20 L filter dryer to filter the solution, and dried under reduced pressure at 50°C for about 4 hours to obtain 1.05 kg of a hybrid metallocene catalyst.

**Preparation Examples 2 to 5 and Comparative Preparation Examples 1 to 3**

Each hybrid metallocene catalyst was prepared in the same manner as in Preparation Example 1, except that the type and the mixing molar ratio of the first and second transition metal compounds were changed as shown in Table 1 below.

[Table 1]

| Catalyst | First transition metal compound | Second transition metal compound | Input amounts of first/second transition metal compounds (mmmol) |
|---|---|---|---|
| Preparation Example 1 | A-1 | B-1 | 20/40 |
| Preparation Example 2 | A-1 | B-2 | 20/40 |
| Preparation Example 3 | A-1 | B-3 | 20/40 |
| Preparation Example 4 | A-1 | B-4 | 20/40 |
| Preparation Example 5 | A-2 | B-1 | 35/40 |
| Comparative Preparation Example 1 | A-1 | C-1 | 20/40 |

(continued)

| Catalyst | First transition metal compound | Second transition metal compound | Input amounts of first/second transition metal compounds (mmmol) |
|---|---|---|---|
| Comparative Preparation Example 2 | A-1 | C-2 | 20/40 |
| Comparative Preparation Example 3 | D | B-1 | 60/40 |

**<Preparation of polyolefin>**

**Examples 1 to 5 and Comparative Examples 1 to 3**

As a polymerization reactor, a 140 L continuous polymerization reactor operated at a reaction flow rate of about 7 m/s was prepared, in which an isobutene slurry loop process is possible. Further, in the reactor, reactants required for olefin polymerization as described in Table 2 were continuously introduced. As the catalyst used for each polymerization reaction, those prepared in Preparation Examples or Comparative Preparation Examples described in Table 1 were used, and the catalyst was introduced after mixing with isobutene slurry. The polymerization reaction was conducted at a pressure of about 40 bar and a temperature of about 85°C. In addition, other main conditions of the polymerization reaction were described in Table 2 below.

**Comparative Example 4**

BO1801EN (manufactured by DAELIM) was commercially purchased and used.

**Comparative Example 5**

XP8318MI, (manufactured by Exxon chemical) was commercially purchased and used.

**Comparative Example 6**

XP8656MI, (manufactured by Exxon chemical) was commercially purchased and used.

[Table 2]

| | Example | | | | | Comparative Example | | |
|---|---|---|---|---|---|---|---|---|
| | 1 | 2 | 3 | 4 | 5 | 1 | 2 | 3 |
| Catalyst | Preparation Example 1 | Preparation Example 2 | Preparation Example 3 | Preparation Example 4 | Preparation Example 5 | Comparative Preparation Example 1 | Comparative Preparation Example 2 | Comparative Preparation Example 3 |
| Polymerization method | Slurry | Slurry | Slurry | Slurry | Slurry | Slurry | Slurry | Slurry |
| Input amount of ethylene (kg/hr) | 20.0 | 20.0 | 20.1 | 21.1 | 22.1 | 20.0 | 23.0 | 19.9 |
| Input amount of 1-hexene[1] (wt%) | 11.1 | 14.1 | 13.5 | 10.5 | 12.2 | 14.0 | 11.1 | 14.4 |
| Input amount of hydrogen[2] (ppm) | 18 | 28 | 27 | 8 | 16 | 24 | 15 | 30 |
| Activity (kgPE/kg$SiO_2$•hr) | 3.8 | 4.4 | 3.6 | 2.9 | 2.1 | 1.5 | 2.0 | 2.0 |

In Table 2,

The input amount (% by weight) of 1-hexene[1] is expressed as a percentage of the relative content, based on the total weight of olefin monomers including ethylene and 1-hexene, and
The input amount (ppm) of hydrogen[2] is based on the total weight of olefin monomers including ethylene and 1-hexene.

**Experimental Example 1**

The physical properties of the polyolefins prepared in Examples and Comparative Examples were measured as follows, and the results are shown in Tables 3 and 4, respectively.

(1) Melt Index ($MI_{2.16}$): measured according to the ASTM D1238 (Condition E, 190 °C, 2.16 kg load) standard.

(2) Melt Index ($MI_{21.6}$): measured according to the ASTM D1238 (Condition E, 190 °C, 21.6 kg load) standard.

(3) MFRR ($MI_{21.6}/MI_{2.16}$): a ratio obtained by dividing $MI_{21.6}$ (ASTM D1238, 190 °C, 21.6 kg load) by $MI_{2.16}$ (ASTM D1238, 190 °C, 2.16 kg load).

(4) Density: measured according to the ASTM D1505 standard.

(5) Molecular weight distribution

Gel permeation chromatography (GPC, manufactured by Waters) was used to measure a weight average molecular weight (Mw) and a number average molecular weight (Mn), respectively, and a molecular weight distribution (Mw/Mn) was calculated from the measured values.

In detail, the measurement samples were evaluated using Polymer Laboratories PLgel MIX-B 300 mm length column and Waters PL-GPC220 device. The measurement temperature was 160°C, 1,2,4-trichlorobenzene was used as a solvent, and the flow rate was 1 mL/min. The samples were prepared at a concentration of 10 mg/10 mL, and then provided in an amount of 200 μL. Mw and Mn values were determined using a calibration curve formed using polystyrene standards. 9 kinds of polystyrene standard specimens each having a molecular weight (g/mol) of 2,000 / 10,000 / 30,000 / 70,000 / 200,000 / 700,000 / 2,000,000 / 4,000,000 / 10,000,000 were used.

(6) CFC analysis

A cross fraction chromatography (CFC) analysis was performed on the polyolefins prepared in Examples and Comparative Examples by the following method, and from the results, a film haze parameter (Hp) and $A_H/A_1$ were calculated.

[Cross fraction chromatography analysis conditions (including TREF and GPC analysis)]

- Analysis equipment: Polymer Char CFC - 7890B (G3440D)
  (Detector: Integrated Detector IR5 MCT)
- Sample preparation and injection: 32 mg of the polyolefin prepared in Examples or Comparative Examples was put into a 10 mL vial and placed in an autosampler, 8 mL of 1,2,4-trichlorobenzene (TCB) was introduced, and dissolved at 160°C for 90 minutes, and stabilized at 140°C for 20 minutes. After nitrogen purging, the sample was extracted and loaded onto a temperature rising elution fractionation column (TREF column).
- Crystallization: the temperature of the sample previously loaded in the TREF column was set at 140°C, and cooled from 140°C to 35°C at a rate of 0.5 °C/min and maintained for 15 minutes.

The detailed conditions for stabilization and crystallization are as follows:

| Heating / Cooling rate | |
|---|---|
| Stabilization rate | 40 °C/min |
| Stabilization temperature | 140 °C |

(continued)

| Heating / Cooling rate | |
|---|---|
| Stabilization time | 20 min |
| Crystallization cooling rate | 0.5 °C/min |
| Crystallization temperature | 35 °C |
| Crystallization time | 15 min |

- Temperature rising elution fractionation (TREF) analysis: The sample previously crystallized was heated from 35°C to 120°C at a rate of 1°C/min to the fraction temperature below, then fixed, and the concentrations of the fractions eluted at that temperature for 5 minutes were measured. The TREF curve was derived from the results of measuring the concentrations.

From the TREF curve, a content ratio (<35°C) of a soluble fraction (SF) eluted in a region of an elution temperature of lower than 35°C, a content ratio (35°C to 55°C) of a fraction eluted in a region of an elution temperature of 35°C or higher and lower than 55°C, a content ratio (55°C to 75°C) of a fraction eluted in a region of an elution temperature of 55°C or higher and 75°C or lower, and a content ratio (>75°C) of a fraction eluted in a region of an elution temperature of higher than 75°C were calculated (wt%), respectively, based on the total weight of all eluted fractions.

Further, from the TREF curve, a content ratio ($W_L$) of a low crystalline polymer which is eluted in a region of an elution temperature of 75°C or lower, specifically, in a region of an elution temperature of 35°C to 75°C, excluding SF, and a content ratio ($W_L$) of a highly crystalline polymer which is eluted in a region of an elution temperature of higher than 75°C were calculated (wt%), respectively, based on the total weight of all eluted fractions.

Further, the elution temperature ($Te_L$) of the lowest peak and the elution temperature ($Te_H$) of the highest peak in the TREF curve were identified.

<Fraction temperature>

35°C/40°C/43°C/46°C/49°C/52°C/55°C/58°C/61°C/64°C/67°C/70°C/73°C/76°C/79°C/82°C/85°C/88°C/91°C/94°C/97°C/100°C/105°C/120°C

<Measurement conditions>

| Fraction elution condition | |
|---|---|
| Elution time | 5 min |
| Analysis time | 15 min |
| Temperature rate (Heating) | 20 °C/min |
| Redissolution time | 5 min |
| **Cleaning condition** | |
| Temperature heating rate | 20 °C/min |
| Cleaning temperature | 150 °C |
| Cleaning time | 30 min |
| **Solvent control condition** | |
| Analysis pump rate | 1 mL/min |
| Cleaning TREF column Flow rate | 1 mL/min |
| Pump stabilization time | 30 min |
| Sample pick up flow rate | 3 mL/min |
| Sample pick up volume | 2.6 mL/min |

(continued)

| Solvent control condition | |
|---|---|
| Load loop flow rate | 1.25 mL/min |
| Load loop flow volume | 1.6 mL |
| Clean line flow rate | 4 mL/min |
| Clean line volume | 5 mL |
| Clean filter flow rate | 4 mL/min |
| Clean filter volume | 10 mL |
| Clean transfer line flow rate | 5 mL/min |
| Clean transfer line volume | 2.5 mL |
| Load TREF column flow rate | 0.2 mL/min |
| Load TREF at X mL from beginning | 1.0 mL |
| Solvent pick up flow rate | 15 mL/min |
| Vial filling flow rate | 5 mL/min |
| Delay volume | 9 mL |
| Acquisition volume | 18 mL |

- GPC analysis: the fractions eluted at each temperature in the previous TREF analysis were transferred to a GPC column of a GPC device which was provided in the CFC device, and then the molecular weights of the eluted molecules were measured according to the following measurement conditions.

Further, from the measurement results, a weight average molecular weight ($M_L$) of the low-crystalline polymer eluted in the region of 75°C or lower, i.e., in the region of the elution temperature of 35°C to 75°C, excluding the soluble fraction (SF), in the TREF curve, and a weight average molecular weight ($M_H$) of the highly crystalline polymer eluted in the region of the elution temperature of higher than 75 °C were calculated, respectively.

<Measurement conditions>

| GPC related condition | |
|---|---|
| CFC load column rate | 0.2 mL/min |
| CFC sample loaded × mL from col start | 1 mL |
| CFC solvent pick up rate | 15 mL/min |
| CFC vial filling rate | 8 mL/min |
| CFC pump stabilization time | 30 min |
| CFC elution time | 5 min |
| CFC delay volume | 0 |
| CFC acquisition volume | 40 mL |
| CFC analysis pump flow | 1 mL/min |
| CFC pick up sample rate | 3 mL/min |
| CFC pick up sample volume | 2.6 mL |
| CFC load loop rate | 1.25 mL/min |
| CFC load loop volume | 1.6 mL |
| CFC clean line rate | 5 mL/min |

(continued)

| GPC related condition | |
|---|---|
| CFC clean line volume | 2 mL |
| CFC clean filter rate | 5 mL/min |
| CFC clean filter volume | 5 mL |
| CFC clean Tr line rate | 5 mL/min |
| CFC clean Tr line volume | 2 mL/min |

Based on the above analysis results, the film haze parameter (Hp) was calculated according to the following Equation 1 below:

[Equation 1]

$$Hp = T_{eL}W_LM_L \text{ x } 10^{-8} + \frac{T_{eH}W_H}{M_H} \text{ x } 100$$

in Equation 1,

$Te_L$ and Ten represent an elution temperature value of a lowest peak and an elution temperature value of a highest peak in a TREF curve by a CFC analysis, respectively,
$W_L$ and $M_L$ represent a content (wt%) of a low crystalline polymer which is eluted in a region of an elution temperature of 75°C or lower, excluding a soluble fraction (SF eluted in a region of an elution temperature of lower than 35°C), in the TREF curve, and a weight average molecular weight (g/mol) value of the low crystalline polymer, respectively,
$W_H$ and $M_H$ represent a content (wt%) of a highly crystalline polymer which is eluted in a region of an elution temperature of higher than 75°C in the TREF curve, and a weight average molecular weight (g/mol) value of the highly crystalline polymer, respectively.

Further, a peak height of a highest peak in the TREF curve is determined as $A_H$, and a peak height of a lowest peak in the TREF curve when the lowest peak exists at an elution temperature of 40°C to 75°C, or a height at an elution temperature of 65°C when the lowest peak exists in the temperature range outside the elution temperature of 40°C to 75°C, or when the lowest peak does not exist because the TREF curve has a single peak is determined as $A_1$, and respective values were obtained to calculate $A_H/A_1$.

In addition, TREF curves obtained through CFC analysis of the polyolefins of Examples 1 to 5 and graphs showing the molecular weight in each elution region are shown in FIGS. 1a to 5b, respectively.

[Table 3]

| | | Example 1 | Example 2 | Example 3 | Example 4 | Example 5 |
|---|---|---|---|---|---|---|
| $MI_{2.16}$ (g/10 min) | | 1.0 | 1.0 | 0.95 | 0.926 | 1.04 |
| $MI_{21.6}$ (g/10 min) | | 27.62 | 26.22 | 27.26 | 25.39 | 30.7 |
| MFRR | | 27.62 | 26.22 | 28.69 | 27.42 | 29.5 |
| Density (g/cm$^3$) | | 0.9189 | 0.9186 | 0.9190 | 0.9178 | 0.9187 |
| MWD | | 2.87 | 3.15 | 3.77 | 3.41 | 3.43 |
| | $Te_L$(°C) | 66.1 | 64.8 | 84 | 81.8 | 82.9 |
| | $Te_H$(°C) | 89.4 | 89.4 | 90.4 | 90.2 | 91.0 |
| | SF (<35°C) (wt%) | 4.3 | 4.6 | 9.5 | 11.1 | 11.2 |
| | 35°C or higher to lower than 55°C (wt%) | 6.9 | 7.1 | 10 | 9.7 | 7.6 |

(continued)

| | | Example 1 | Example 2 | Example 3 | Example 4 | Example 5 |
|---|---|---|---|---|---|---|
| CFC analysis | 55°C or higher to 75°C or lower (wt%) | 34.6 | 32.6 | 29.2 | 27.9 | 25.6 |
| | >75°C ($W_H$, wt%) | 54.2 | 55.7 | 51.4 | 51.3 | 54.7 |
| | $W_L$ (wt%) | 41.6 | 39.7 | 39.2 | 37.6 | 33.2 |
| | $M_L$ (g/mol) | 170,852 | 209,812 | 139,653 | 132,776 | 133,175 |
| | $M_H$ (g/mol) | 70,600 | 92,987 | 108,509 | 104,160 | 80,314 |
| $A_H/A_1$ | | 1.81 | 2.58 | 2.47 | 2.7 | 2.67 |
| Hp | | 11.6 | 10.8 | 8.9 | 8.5 | 9.9 |

[Table 4]

| | | Comparative Example 1 | Comparative Example 2 | Comparative Example 3 | Comparative Example 4 | Comparative Example 5 | Comparative Example 6 |
|---|---|---|---|---|---|---|---|
| $MI_{2.16}$ (g/10 min) | | 0.9 | 0.9 | 0.83 | 1.0 | 1.0 | 0.5 |
| $MI_{21.6}$ (g/10 min) | | 25.3 | 25.3 | 18.5 | 26.0 | 28.1 | 16.5 |
| MFRR | | 28.1 | 28.1 | 22.3 | 26.0 | 28.1 | 32.9 |
| Density ($g/cm^3$) | | 0.9199 | 0.9190 | 0.9163 | 0.9190 | 0.9189 | 0.9161 |
| MWD | | 3.42 | 4.08 | 2.45 | 3.71 | 3.26 | 3.46 |
| CFC analysis | $Te_L$(°C) | 63.2 | 82.9 | | 66.5 | 61 | 62.6 |
| | $Te_H$(°C) | 89.4 | 90 | 74.2 | 89.8 | 88.4 | 88.5 |
| | SF (<35°C) (wt%) | 5.9 | 8.5 | 1.0 | 1.8 | 3.1 | 6.8 |
| | 35°C or higher to lower than 55°C (wt%) | 7.3 | 8.9 | 2.7 | 5.2 | 7.4 | 9.1 |
| | 55°C or higher to 75°C or lower (wt%) | 30.6 | 28.5 | 43.3 | 35.5 | 36.8 | 33.1 |
| | >75°C ($W_H$, wt%) | 56.2 | 54 | 53 | 57.5 | 52.7 | 51 |
| | $W_L$ (wt%) | 37.9 | 37.4 | 46 | 40.7 | 44.2 | 42.2 |
| | $M_L$ (g/mol) | 178,435 | 125,495 | 133,711 | 231,222 | 225,162 | 273,535 |
| | $M_H$ (g/mol) | 64,089 | 111,867 | 113,110 | 73,598 | 70,453 | 73,096 |
| $A_H/A_1$ | | 2.44 | 2.22 | 1.99 | 1.35 | 2.11 | 2.46 |
| Hp | | 12.1 | 8.2 | 3.5 | 12.2 | 12.7 | 13.4 |

**Experimental Example 2**

Films were produced using each of the polyolefins prepared in Examples and Comparative Examples, and then dart drop impact strength and haze properties were evaluated. The results are shown in Tables 5 and 6 below.

(1) Production of film

Based on the total weight of the polyolefin prepared in Examples or Comparative Examples, 1500 ppm of antioxidant (a weight ratio of Songnox 1076 (Songwon): Songnox 1680 (Songwon) = 1:2) and 300 ppm of 3M Dynamar Polymer Processing Additive FX5929 were added and mixed, and then extruded using a twin-screw extruder (TEK 30 MHS, manufactured by SMPLATECH CO., diameter of 32 pi, L/D=40) at an extrusion temperature of 190°C and an extrusion rate of 35 kg/hr to prepare approximately 18 mg of a pellet-like composition for producing a film.

The composition for producing a film prepared as above was extruded under the following film extrusion conditions to produce a film.

<Film extrusion conditions>

Single Screw Extruder (manufactured by YOOJIN ENGINEERING, Blown Film M/C, 50 pi)
Melt temperature (or extrusion temperature): 170°C
Die Gap: 2.0 mm
Die diameter: 120 mm
Blown-Up Ratio: 2.5
Frost Line Height: maintained at 250 mm to 260 mm
Sample extrusion amount: 300 g/min to 500 g/min
Film thickness: 50 μm and 25 μm

**(2) Dart drop impact strength**

For the films (thickness: 50 μm and 25 μm) of Examples and Comparative Examples produced above, the dart drop impact strength was measured according to ASTM D1709 [Method A] standard, which was repeated 20 or more times for each film sample, and then the average value was taken.

(3) HAZE

For the films (thickness: 50 μm and 25 μm) of Examples and Comparative Examples produced above, the haze of the film was measured according to ISO 13468 standard.

[Table 5]

| | Film thickness (μm) | Example 1 | Example 2 | Example 3 | Example 4 | Example 5 |
|---|---|---|---|---|---|---|
| Dart drop impact (gf) | 50 | >1900 | >1900 | >1900 | 1850 | 1800 |
| | 25 | 1190 | 1230 | 1100 | 1000 | 1100 |
| Haze (%) | 50 | 13.5 | 13.4 | 12.4 | 9.9 | 13.8 |
| | 25 | 8.6 | 9.9 | 8.9 | 7.4 | 9.7 |

[Table 6]

| | Film thickness (μm) | Comparative Example 1 | Comparative Example 2 | Comparative Example 3 | Comparative Example 4 | Comparative Example 5 | Comparative Example 6 |
|---|---|---|---|---|---|---|---|
| Dart | 50 | 1740 | 1232 | 1450 | >1900 | >1900 | >1900 |
| drop impa ct (gf) | 25 | 1070 | 823 | 780 | 1200 | 1150 | 1300 |

(continued)

| | Film thickness (μm) | Comparative Example 1 | Comparative Example 2 | Comparative Example 3 | Comparative Example 4 | Comparative Example 5 | Comparative Example 6 |
|---|---|---|---|---|---|---|---|
| Haze (%) | 50 | 18.3 | 9.8 | 6.3 | 20.0 | 27.8 | 24.7 |
| | 25 | 8.8 | 10.3 | 6.1 | 12 | 20 | 19.8 |

## Claims

1. A polyolefin satisfying the following requirements of (i) to (iii):

(i) a film haze parameter (Hp) defined by the following Equation 1 below: 12 or less

[Equation 1]

$$Hp = T_{eL}W_LM_L \times 10^{-8} + \frac{T_{eH}W_H}{M_H} \times 100$$

(in Equation 1,

$Te_L$ and $Te_H$ represent an elution temperature value of a lowest peak and an elution temperature value of a highest peak in a temperature rising elution fractionation (TREF) curve by a cross fraction chromatography analysis, respectively,
$W_L$ and $M_L$ represent a content ratio (% by weight) value of a low crystalline polymer which is eluted in a region of an elution temperature of 75°C or lower, excluding a soluble fraction which is eluted in a region of an elution temperature of lower than 35°C, in the temperature rising elution fractionation curve, and a weight average molecular weight (g/mol) value of the low crystalline polymer, respectively, and
$W_H$ and $M_H$ represent a content ratio (% by weight) value of a highly crystalline polymer which is eluted in a region of an elution temperature of higher than 75°C in the temperature rising elution fractionation curve, and a weight average molecular weight (g/mol) value of the highly crystalline polymer, respectively),

(ii) $A_H/A_1$ which is a peak height ratio in the TREF curve by the cross fraction chromatography analysis: 1.8 or more
(wherein $A_H$ represents a peak height of a highest peak in the temperature rising elution fractionation curve, and $A_1$ represents a peak height of a lowest peak when the lowest peak in the temperature rising elution fractionation curve exists at an elution temperature of 40°C to 75°C, and represents a height at an elution temperature of 65°C when the lowest peak in the temperature rising elution fractionation curve does not exist at an elution temperature of 40°C to 75°C, or when the lowest peak does not exist because the temperature rising elution fractionation curve has a single peak), and
(iii) a molecular weight distribution: 2.5 to 4.

2. The polyolefin according to claim 1, wherein the film haze parameter, Hp is 8 to 12.

3. The polyolefin according to claim 1, wherein $A_H/A_1$ is 1.8 to 3.

4. The polyolefin according to claim 1, wherein $W_L$ is 33 to 45, and $M_L$ is 130,000 or more.

5. The polyolefin according to claim 1, wherein $W_H$ is 50 to 60, and $M_H$ is 70,000 to 110,000.

6. The polyolefin according to claim 1, wherein $Te_L$ is 60 to 90, and $Te_H$ is 80 to 100.

7. The polyolefin according to claim 1, wherein the polyolefin has a density of 0.915 g/cc to 0.925 g/cc, as measured according to ASTM D1505.

**8.** The polyolefin according to claim 1, wherein the polyolefin has a melt index, $MI_{2.16}$ of 0.5 g/10 min to 1.5 g/10 min, which is measured according to ASTM D1238 at a temperature of 190°C under a load of 2.16 kg, and a melt index, $MI_{21.6}$ of 10 g/10 min to 50 g/10 min, which is measured at a temperature of 190°C under a load of 21.6 kg.

**9.** The polyolefin according to claim 1, wherein the polyolefin has a MFRR of 20 to 30, which is a ratio obtained by dividing a melt index, $MI_{21.6}$ measured according to ASTM D1238 standard at a temperature of 190°C under a load of 21.6 kg by a melt index $MI_{2.16}$ measured at a temperature of 190°C under a load of 2.16 kg.

**10.** The polyolefin according to claim 1, wherein the polyolefin is a copolymer of ethylene/1-hexene.

**11.** A film comprising the polyolefin according to claim 1.

**12.** The film according to claim 11, wherein the film has a dart drop impact strength of 1600 gf or more, as measured according to the Method A of ASTM D 1709 under conditions of BUR of 2.3 to 3 and a film thickness of 50 μm to 65 μm, and has a haze of 15% or less, as measured according to ISO 13468 standard.

**13.** The film according to claim 11, wherein the film has a dart drop impact strength of 1000 gf or more, as measured according to the Method A of ASTM D 1709 under conditions of BUR of 2.3 to 3 and a film thickness of 20 μm to 30 μm, and has a haze of 10% or less, as measured according to ISO 13468 standard.

**14.** The film according to claim 11, wherein the film is a blown film.

【FIG. 1a】

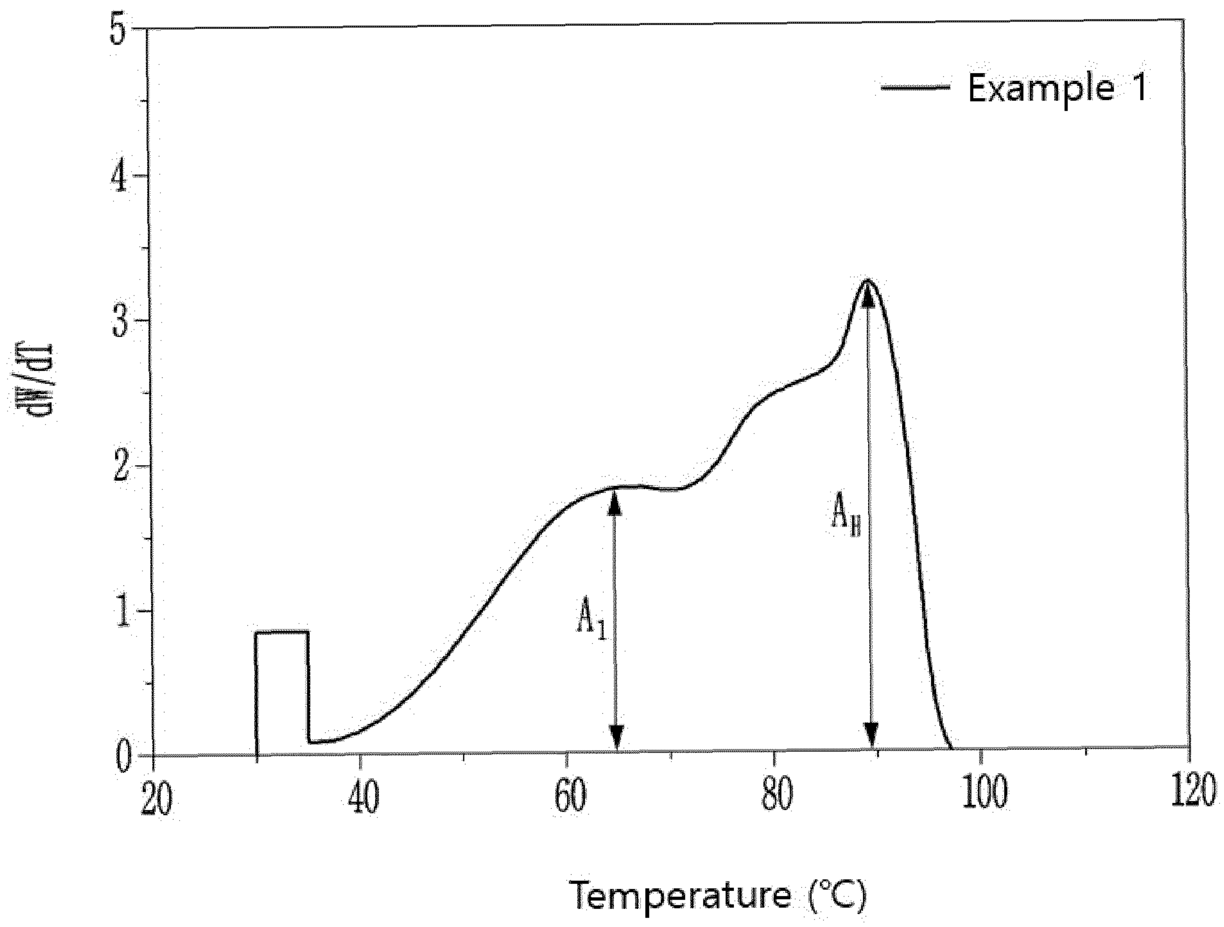

【FIG. 1b】

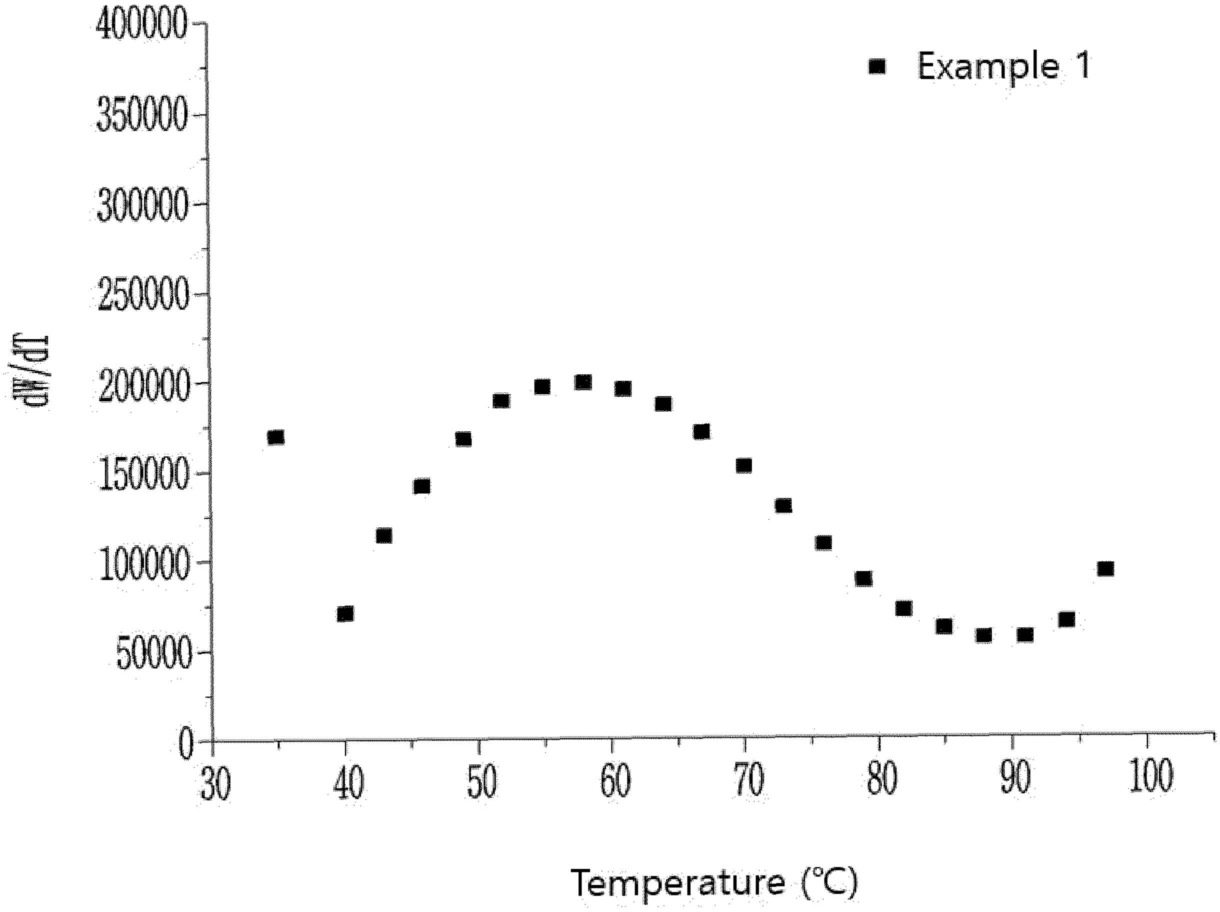
400000
350000
300000
250000
200000
150000
100000
50000
0
dW/dT
30
40
50
60
70
80
90
100
Example 1
Temperature (℃)

【FIG. 2a】

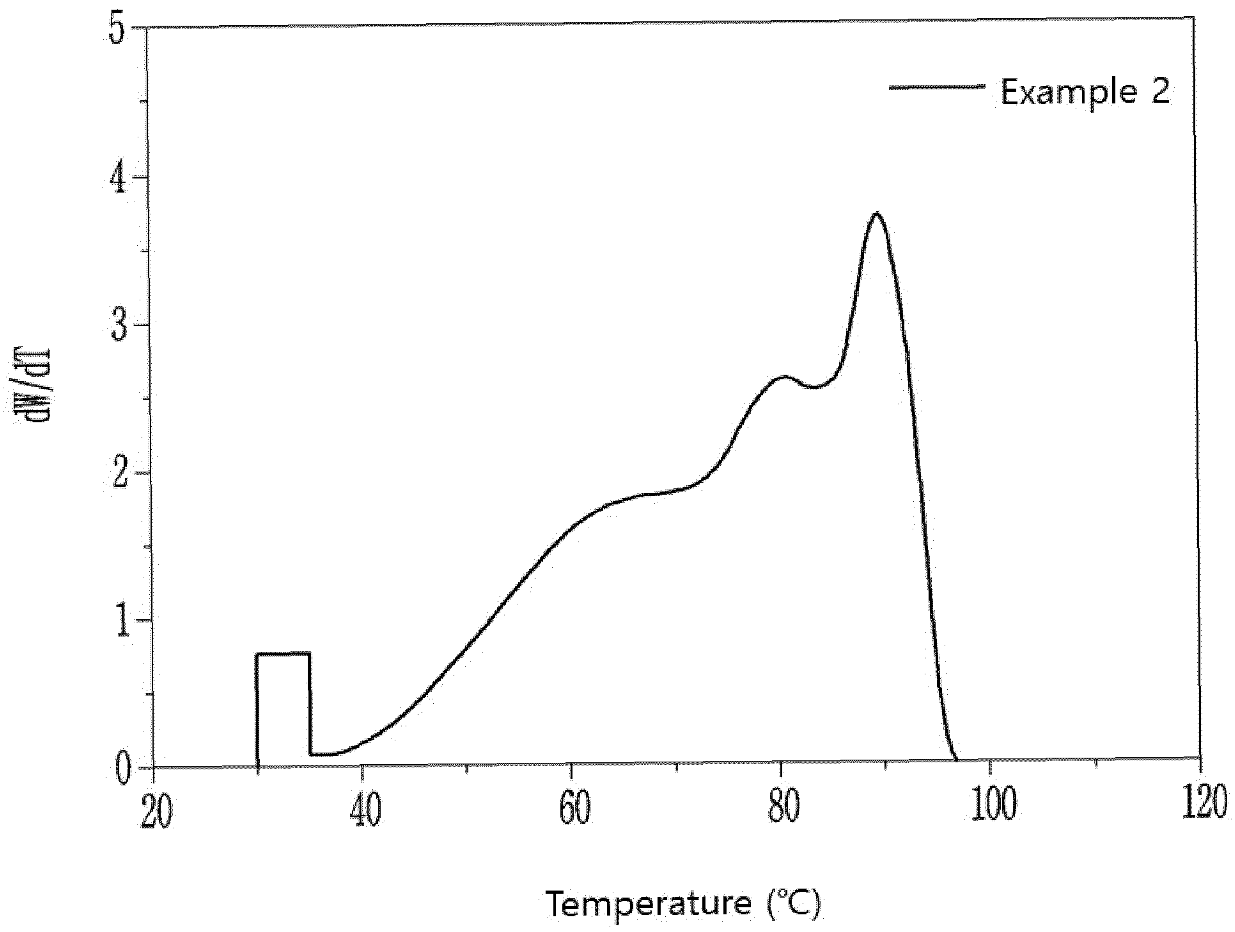

【FIG. 2b】

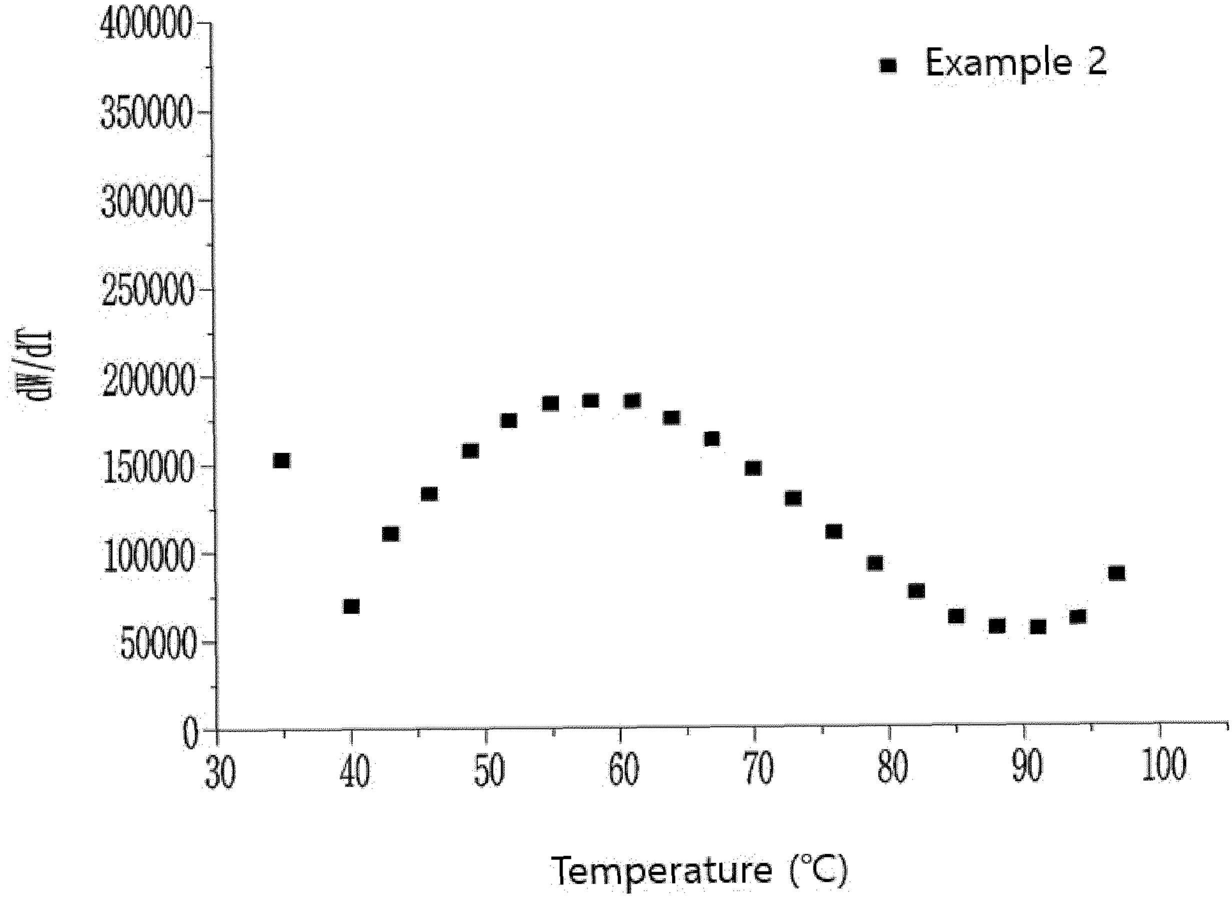
Example 2
dW/dT
Temperature (℃)
400000
350000
300000
250000
200000
150000
100000
50000
0
30
40
50
60
70
80
90
100

【FIG. 3a】

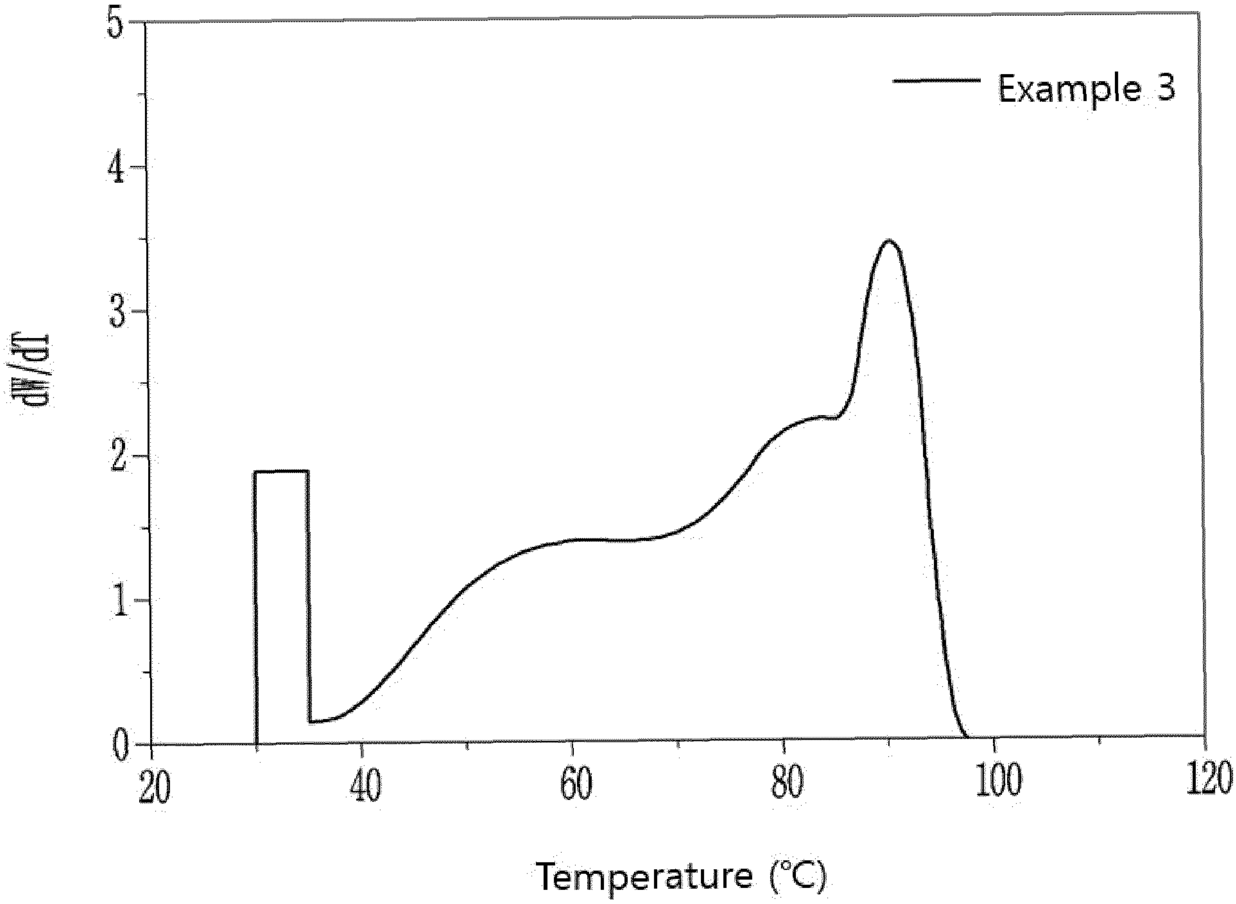

【FIG. 3b】

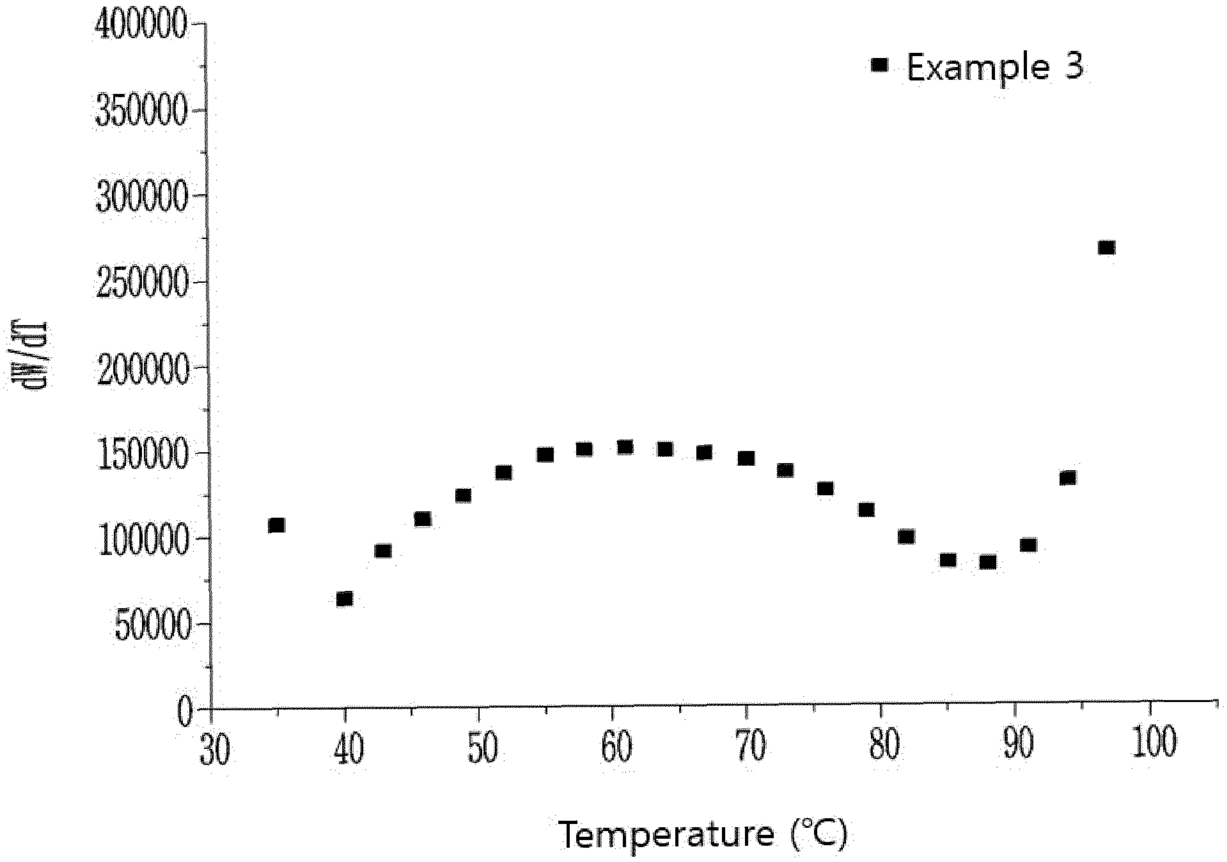

Example 3
dW/dT
400000
350000
300000
250000
200000
150000
100000
50000
0
30
40
50
60
70
80
90
100
Temperature (℃)

【FIG. 4a】

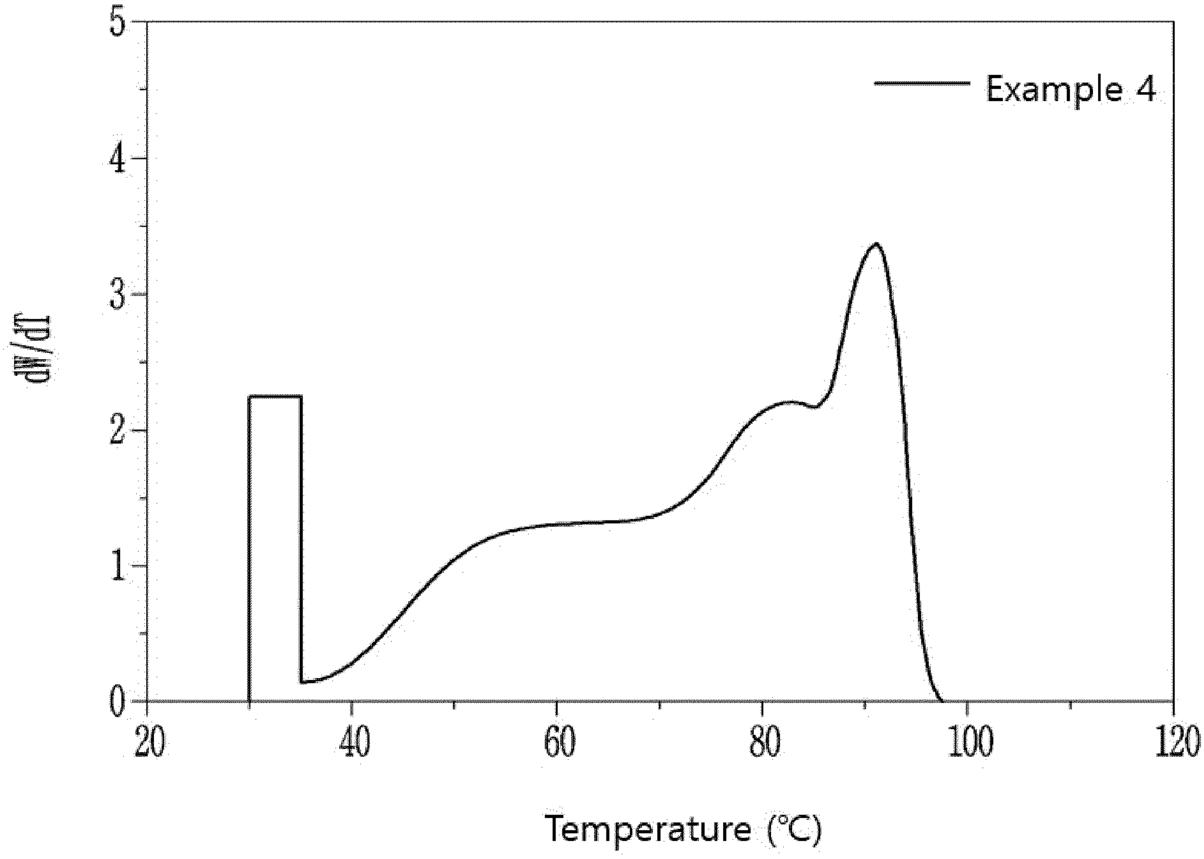

【FIG. 4b】

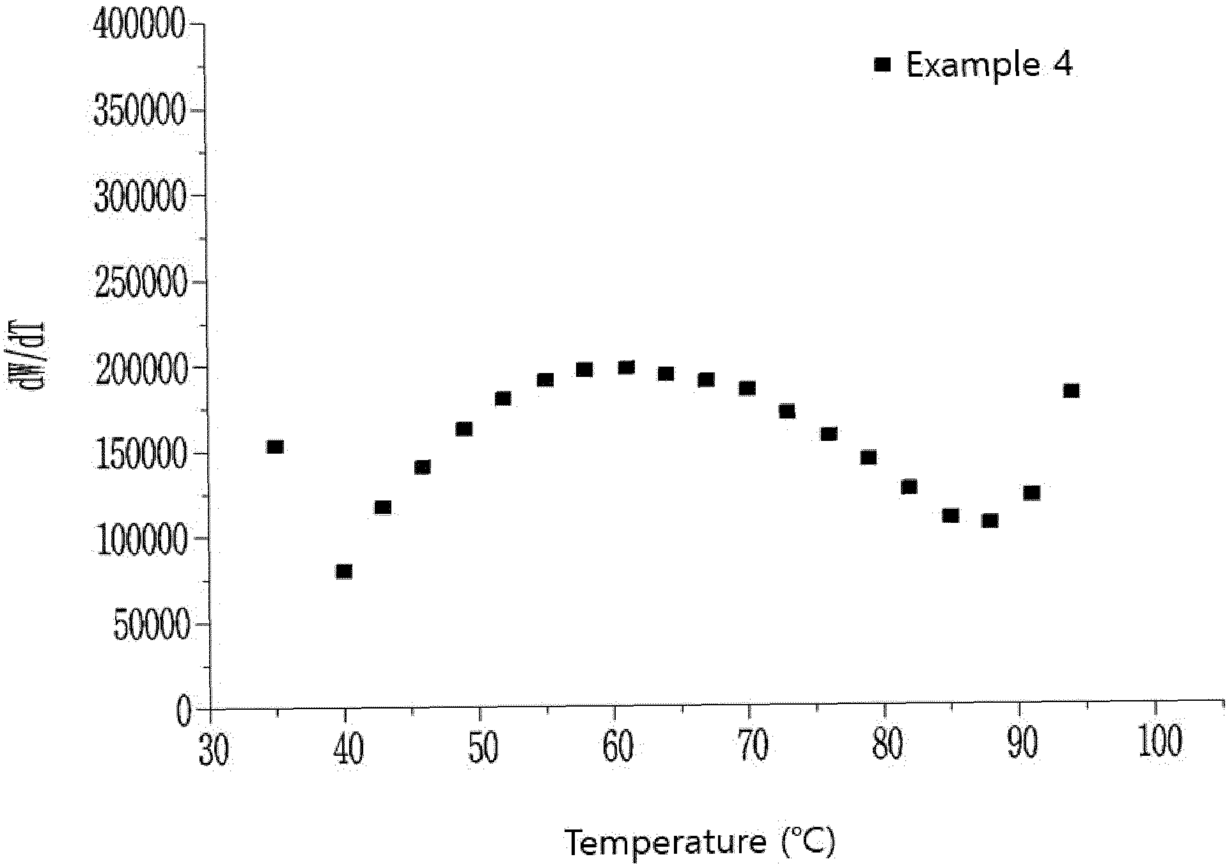
400000
350000
300000
250000
200000
150000
100000
50000
0
dW/dT
30
40
50
60
70
80
90
100
Temperature (°C)
Example 4

【FIG. 5a】

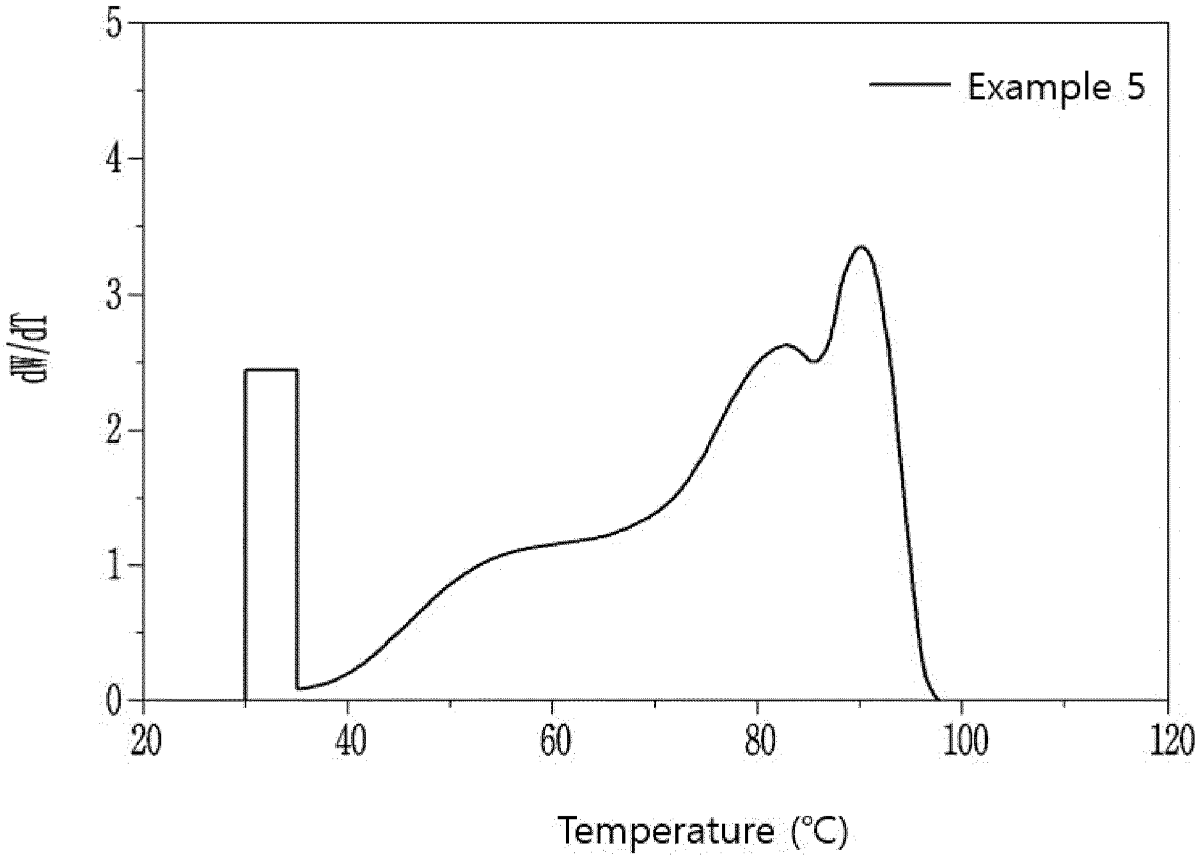

【FIG. 5b】

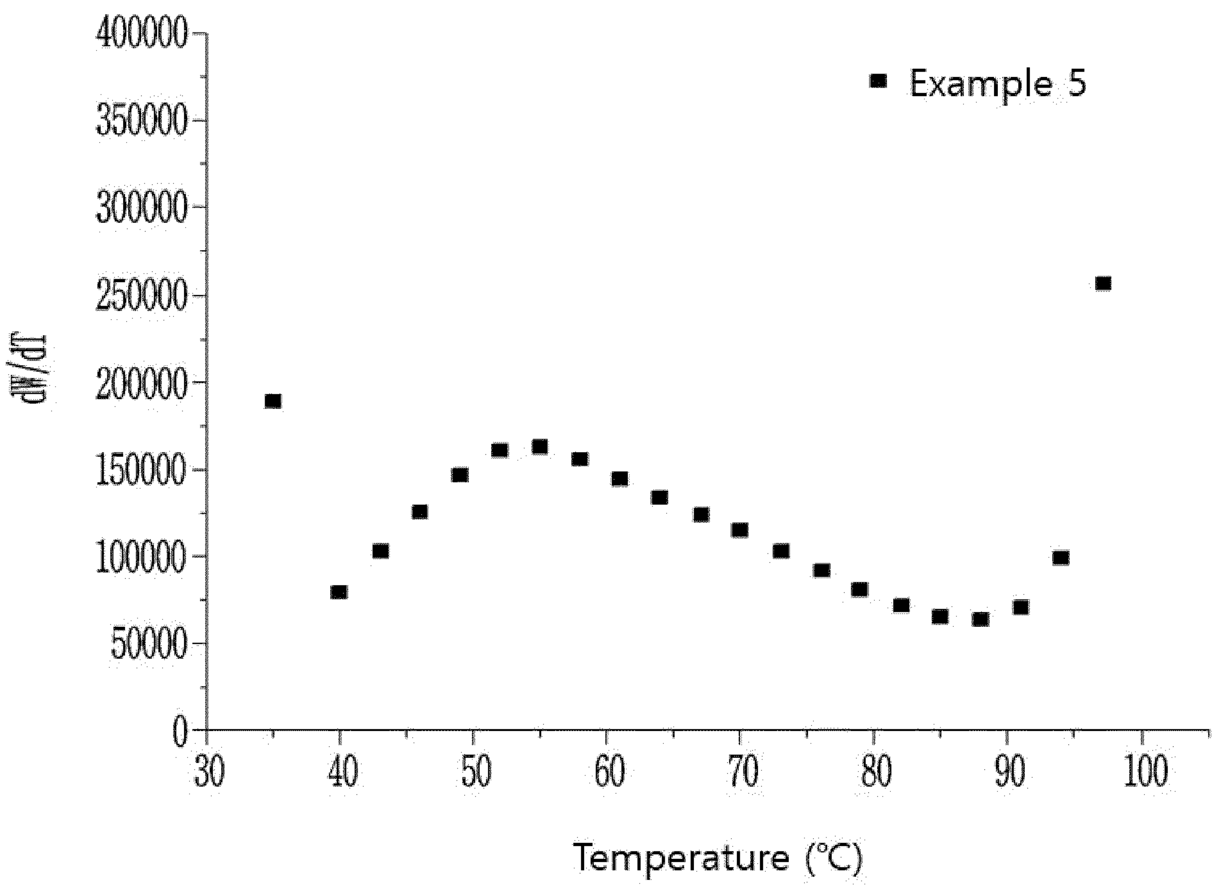
Example 5
dW/dT
Temperature (℃)
400000
350000
300000
250000
200000
150000
100000
50000
0
30
40
50
60
70
80
90
100

# INTERNATIONAL SEARCH REPORT

International application No.
**PCT/KR2023/016345**

## A. CLASSIFICATION OF SUBJECT MATTER

**C08F 210/16**(2006.01)i; **C08F 210/14**(2006.01)i; **C08J 5/18**(2006.01)i

According to International Patent Classification (IPC) or to both national classification and IPC

## B. FIELDS SEARCHED

Minimum documentation searched (classification system followed by classification symbols)

C08F 210/16(2006.01); C08F 10/02(2006.01); C08F 110/02(2006.01); C08F 2/06(2006.01); C08F 216/14(2006.01); C08F 297/08(2006.01); C08F 4/646(2006.01); C08F 4/6592(2006.01); D01F 6/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리올레핀(polyolefin), 시차주사열량분석(differential scanning calorimetry, DSC), 교차 분획 크로마토그래피 분석(cross-fraction chromatography), 메탈로센(metallocene), 촉매(catalyst), 필름(film), 헤이즈(haze)

## C. DOCUMENTS CONSIDERED TO BE RELEVANT

| Category* | Citation of document, with indication, where appropriate, of the relevant passages | Relevant to claim No. |
|---|---|---|
| Y | KR 10-1725004 B1 (HANWHA CHEMICAL CORPORATION) 18 April 2017 (2017-04-18) See abstract; paragraphs [0004]-[0197]; examples 1-12; and claims 1-13. | 1-14 |
| Y | KR 10-2021-0153555 A (LG CHEM, LTD.) 17 December 2021 (2021-12-17) See paragraphs [0215]-[0219]. | 1-14 |
| A | KR 10-2022-0086857 A (HANWHA SOLUTIONS CORPORATION) 24 June 2022 (2022-06-24) See entire document. | 1-14 |
| A | WO 2008-067539 A1 (DOW GLOBAL TECHNOLOGIES INC. et al.) 05 June 2008 (2008-06-05) See entire document. | 1-14 |
| A | KR 10-2355323 B1 (BOREALIS AG) 25 January 2022 (2022-01-25) See entire document. | 1-14 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **24 January 2024** | **25 January 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/016345**

| Patent document cited in search report | Publication date (day/month/year) | Patent family member(s) | Publication date (day/month/year) |
|---|---|---|---|
| KR 10-1725004 B1 | 18 April 2017 | CN 109415450 A | 01 March 2019 |
| | | EP 3450467 A1 | 06 March 2019 |
| | | EP 3450467 A4 | 15 January 2020 |
| | | JP 2019-515997 A | 13 June 2019 |
| | | JP 6804559 B2 | 23 December 2020 |
| | | US 11248067 B2 | 15 February 2022 |
| | | US 2019-0263942 A1 | 29 August 2019 |
| | | WO 2017-188602 A1 | 02 November 2017 |
| KR 10-2021-0153555 A | 17 December 2021 | None | |
| KR 10-2022-0086857 A | 24 June 2022 | CN 116710496 A | 05 September 2023 |
| | | EP 4265654 A1 | 25 October 2023 |
| | | KR 10-2611686 B1 | 08 December 2023 |
| | | WO 2022-131693 A1 | 23 June 2022 |
| WO 2008-067539 A1 | 05 June 2008 | AU 2008-325009 A1 | 05 June 2008 |
| | | CA 2671256 A1 | 05 June 2008 |
| | | CN 101595252 A | 02 December 2009 |
| | | EP 2084313 A1 | 05 August 2009 |
| | | JP 2010-511801 A | 15 April 2010 |
| | | KR 10-2009-0086422 A | 12 August 2009 |
| | | TW 200902780 A | 16 January 2009 |
| | | US 2008-0299857 A1 | 04 December 2008 |
| | | US 7928022 B2 | 19 April 2011 |
| KR 10-2355323 B1 | 25 January 2022 | CN 106459278 A | 22 February 2017 |
| | | CN 106459278 B | 06 November 2020 |
| | | EP 3131934 A2 | 22 February 2017 |
| | | EP 3131934 B1 | 22 January 2020 |
| | | ES 2770021 T3 | 30 June 2020 |
| | | JP 2017-511418 A | 20 April 2017 |
| | | JP 6734783 B2 | 05 August 2020 |
| | | KR 10-2016-0147835 A | 23 December 2016 |
| | | RU 2016142451 A | 17 May 2018 |
| | | RU 2016142451 A3 | 30 October 2018 |
| | | RU 2693453 C2 | 03 July 2019 |
| | | TW 201605913 A | 16 February 2016 |
| | | TW I547507 B | 01 September 2016 |
| | | US 10167355 B2 | 01 January 2019 |
| | | US 2017-0037165 A1 | 09 February 2017 |
| | | WO 2015-158790 A2 | 22 October 2015 |
| | | WO 2015-158790 A3 | 28 January 2016 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220144765
- KR 1020230137792
- KR 1020220067494
- KR 1020160067508
- KR 1020160029718